(19) Europäisches Patentamt
European Patent Office
Office européen des brevets

(11) **EP 1 347 595 A1**

(12) **EUROPEAN PATENT APPLICATION**

(43) Date of publication:
**24.09.2003 Bulletin 2003/39**

(51) Int Cl.⁷: **H04L 9/06**

(21) Application number: **03005370.6**

(22) Date of filing: **12.03.2003**

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (72) Inventors:<br>• **Yokota, Kaoru**<br>  **Hyogo-ken 659-0016 (JP)**<br>• **Ohmori, Motoji**<br>  **Osaka-fu 573-0071 (JP)** |
| (30) Priority: **14.03.2002 JP 2002070938** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **MATSUSHITA ELECTRIC INDUSTRIAL CO., LTD.**<br>**Kadoma-shi, Osaka 571-8501 (JP)** | |

(54) **Data encryption/decryption device**

(57)    Consider a case of implementing a circuit which performs both encryption and decryption according to a cipher that has the SPN construction. If a data transformation performed by a data transformation unit is an involution, i.e., a transformation which is equal to its own inverse, then the same data transformation unit can be commonly used for encryption and decryption. This enables a circuit which performs both encryption and decryption to be implemented without increases in circuit scale.

FIG.7

**Description**

This application is based on an application No. 2002-070938 filed in Japan, the contents of which are hereby incorporated by reference.

BACKGROUND OF THE INVENTION

Field of the Invention

The present invention relates to a data encryption device and a data decryption device.

Related Art

Digital communications have become widespread in recent years. To foster sound industrial development and also to protect privacy, increasing importance is attached to ensuring confidentiality of data in such digital communications. Data cryptography provides a means of ensuring data confidentiality. Data cryptography needs to have a high level of security against cryptanalytic attacks.

One example of such cryptographic techniques is a block cipher. A block cipher is the following. First, plaintext is partitioned into blocks of a predetermined size. Then a nonlinear transformation is performed on each of these blocks, thereby generating ciphertext. Thus, block ciphers achieve high security by employing nonlinear transformations. Examples of block ciphers include Serpent and Hierocrypt-3. These block ciphers have the SPN (Substitution-Permutation Network) construction. The SPN construction is explained using a specific example below.

To realize a block cipher having the SPN construction, an encryption device has four data transformation units and one data diffusion unit. When 128-bit plaintext data is input, the encryption device divides the plaintext data into four 32-bit data blocks. These four 32-bit data blocks are input respectively to the four data transformation units. Each data transformation unit performs a nonlinear transformation on its input 32-bit data block, and outputs the result to the data diffusion unit. The data diffusion unit receives the four 32-bit data blocks from the four data transformation units, and shuffles these four 32-bit data blocks. The four 32-bit data blocks are then connected and output as 128-bit ciphertext data. In an actual encryption device, the above operations of the data transformation units and data diffusion unit are repeated a plurality of times to generate ciphertext.

To decrypt this ciphertext data into the original plaintext data, a decryption device has one inverse data diffusion unit and four inverse data transformation units. When the 128-bit ciphertext data is input, the decryption device divides the ciphertext data into four 32-bit data blocks. These 32-bit data blocks are input in the inverse data diffusion unit. The inverse data diffusion unit performs the inverse operation of the above data diffusion unit on the four 32-bit data blocks. Having done so, the inverse data diffusion unit outputs the resulting four 32-bit data blocks respectively to the four inverse data transformation units. Each inverse data transformation unit performs the inverse operation of the above data transformation units on its input 32-bit data block. The resulting four 32-bit data blocks are connected and output as the 128-bit plaintext data. In an actual decryption device, the above operations of the inverse data diffusion unit and inverse data transformation units are repeated the same number of times as in the encryption device, to generate plaintext.

Thus, according to a block cipher having the SPN construction, data transformation units and data diffusion unit used for encryption conduct different operations from data transformation units and data diffusion unit used for decryption. In other words, the inverse operation of the encryption is performed in the decryption. Accordingly, when implementing a circuit that performs both encryption and decryption, the circuit scale needs to be twice as large as a circuit that performs only one of encryption and decryption. This causes increases in cost.

SUMMARY OF THE INVENTION

The present invention was conceived in view of the problem described above, and has an object of providing a data encryption device and data decryption device which enable a circuit that performs both encryption and decryption to be implemented without increases in circuit scale.

The stated object can be achieved by a data encryption device for encrypting N-bit plaintext to generate N-bit ciphertext where N is a positive integer, including: a division unit operable to divide the N-bit plaintext into M data blocks which are each B bits long, where $N=M \times B$; a first transformation unit operable to perform a data transformation on each of the M data blocks, the data transformation being equal to its own inverse; a diffusion unit operable to perform an invertible data diffusion on the M data blocks transformed by the first transformation unit; a second transformation unit operable to perform the same data transformation as the data transformation performed by the first transformation unit, on each of the M data blocks diffused by the diffusion unit; and a connection unit operable to connect the M data blocks transformed by the second transformation unit, thereby generating the N-bit ciphertext.

According to this construction, the data encryption device uses such a data transformation that is equal to its own inverse. Therefore, the data encryption device can decrypt ciphertext which was generated by the data encryption device itself, by performing the same data transformation again on the ciphertext. Hence a circuit that performs the data transformation can be commonly used for encryption and decryption.

Here, the first transformation unit may include:

a division subunit operable to divide each of the M data blocks into first data of higher-order B/2 bits and second data of lower-order B/2 bits; a shuffle subunit operable to shuffle the first data and the second data to generate third data of higher-order B/2 bits and fourth data of lower-order B/2 bits; and a connection subunit operable to exchange in order the third data and the fourth data, and connect the exchanged third data and fourth data as a data block transformed by the first transformation unit.

According to this construction, the data transformation is equal to its own inverse, because the third data and the fourth data are exchanged in order. Hence the data encryption device can decrypt ciphertext which was generated by the data encryption device itself, by using the same data transformation.

Here, the shuffle subunit may include: a substitution subunit operable to concurrently (a) perform a substitution on the second data and output the substituted second data to a combination subunit, and (b) output the second data as the fourth data; and the combination subunit operable to combine the first data and the substituted second data, and output the combination as the third data.

According to this construction, the data shuffling effect is enhanced.

Here, the first transformation unit may be operable to perform the data transformation on each of the M data blocks a plurality of times, and the diffusion unit may be operable to perform the data diffusion on the M data blocks transformed by the first transformation unit, a plurality of times.

According to this construction, the data shuffling effect is further enhanced.

The stated object can also be achieved by a data encryption device for encrypting N-bit plaintext to generate N-bit ciphertext where N is a positive integer, including: a division unit operable to divide the N-bit plaintext into M data blocks which are each B bits long, where $N=M \times B$; a first transformation unit operable to perform a series of operations a plurality of times on each of the M data blocks, the series of operations including, in the stated order, (a) a data transformation that is equal to its own inverse and (b) an invertible data diffusion; a round control unit operable to count a number of times the first transformation unit has performed the series of operations, and when the number reaches a predetermined number, to output the resulting M data blocks to a second transformation unit; the second transformation unit operable to perform the same data transformation as the data transformation performed by the first transformation unit, on each of the M data blocks output from the round control unit; and a connection unit operable to connect the M data blocks transformed by the second transformation unit, thereby generating the N-bit ciphertext.

According to this construction, the data encryption device repeats the data transformation and the data diffusion a plurality of times. This increases the data shuffling effect. Also, the data encryption device uses such a data transformation that is equal to its own inverse. Hence the data encryption device can decrypt ciphertext which was generated by the data encryption device itself, by using the same data transformation.

The stated object can also be achieved by a data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where $N=M \times B$, (2) performing a data transformation that is equal to its own inverse, on each of the M data blocks, (3) performing an invertible data diffusion on the transformed M data blocks, (4) further performing the data transformation on each of the diffused M data blocks, and (5) connecting the further transformed M data blocks as the N-bit ciphertext, the data decryption device including: a division unit operable to divide the N-bit ciphertext into M data blocks which are each B bits long; a first transformation unit operable to perform the same data transformation as the data transformation performed by the data encryption device, on each of the M data blocks divided by the division unit; an inverse diffusion unit operable to perform an inverse of the data diffusion performed by the data encryption device, on the M data blocks transformed by the first transformation unit; a second transformation unit operable to perform the same data transformation as the data transformation performed by the data encryption device, on each of the M data blocks inverse-diffused by the inverse diffusion unit; and a connection unit operable to connect the M data blocks transformed by the second transformation unit, thereby obtaining the N-bit plaintext.

According to this construction, the data decryption device performs the same data transformation as the data encryption device. Therefore, the data decryption device can share a circuit that performs the data transformation with the data encryption device.

The stated object can also be achieved by a data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where N=M×B, (2) performing a first series of operations a plurality of times on each of the M data blocks, the first series of operations including, in the stated order, (a) a data transformation that is equal to its own inverse and (b) an invertible data diffusion, (3) counting a number of times the first series of operations has been performed, and when the number reaches a predetermined number, outputting the resulting M data blocks, (4) further performing the data transformation on each of the output M data blocks, and (5) connecting the further transformed M data blocks as the N-bit ciphertext, the data decryption device including: a division unit operable to divide the N-bit ciphertext into M data blocks which are each B bits long; a first transformation unit operable to perform a second series of operations a plurality of times on each of the M data blocks divided by the division unit, the second series of operations including, in the stated order, (c) the same data transformation as the data transformation performed by the data encryption device and (d) an inverse of the data diffusion performed by the data encryption device; a round control unit operable to count a number of times the first transformation unit has performed the second series of operations, and when the number reaches the predetermined number, to output the resulting M data blocks to a second transformation unit; the second transformation unit operable to perform the same data transformation as the data transformation performed by the data encryption device, on each of the M data blocks output from the round control unit; and a connection unit operable to connect the M data blocks transformed by the second transformation unit, thereby obtaining the N-bit plaintext.

According to this construction, the data decryption device performs the same data transformation as the data encryption device. Hence the data decryption device can share a circuit that performs the data transformation with the data encryption device.

The stated object can also be achieved by a data encryption/decryption device for encrypting/decrypting first N-bit data to generate second N-bit data where N is a positive integer, including: a division unit operable to divide the first N-bit data into M data blocks which are each B bits long, where N=M×B; a first transformation unit operable to perform a data transformation on each of the M data blocks, the data transformation being equal to its own inverse; a switch unit operable to switch an output destination of the M data blocks transformed by the first transformation unit, depending on whether the first N-bit data is subjected to encryption or decryption; a diffusion unit operable to receive the M data blocks transformed by the first transformation unit when the first N-bit data is subjected to encryption, and perform an invertible data diffusion on the received M data blocks; an inverse diffusion unit operable to receive the M data blocks transformed by the first transformation unit when the first N-bit data is subjected to decryption, and perform an inverse of the data diffusion on the received M data blocks; a second transformation unit operable to perform the same data transformation as the data transformation performed by the first transformation unit, on each of the M data blocks diffused by the diffusion unit or inverse-diffused by the inverse diffusion unit; and a connection unit operable to connect the M data blocks transformed by the second transformation unit, thereby generating the second N-bit data.

According to this construction, the data encryption/decryption device uses such a data transformation that is equal to its own inverse. Which is to say, the data encryption/decryption device performs the same data transformation for both encryption and decryption. This allows the same data transformation circuit to be used for encryption and decryption. Hence the circuit scale can be reduced when compared with the case where different data transformations are performed for encryption and decryption, with it being possible to reduce costs.

BRIEF DESCRIPTION OF THE DRAWINGS

These and other objects, advantages and features of the invention will become apparent from the following description thereof taken in conjunction with the accompanying drawings which illustrate a specific embodiment of the invention.

In the drawings:

FIG. 1 shows a construction of a cryptographic communication system to which an embodiment of the invention relates;
FIG. 2 is a block diagram showing a construction of a reception device shown in FIG. 1;
FIG. 3 is a block diagram showing a construction of an encryption/decryption unit shown in FIG. 2;
FIG. 4 is a block diagram showing a construction of a second data scramble unit shown in FIG. 3;
FIG. 5 is a block diagram showing a construction of a first data scramble unit shown in FIG. 3;
FIG. 6 shows a construction of a data transformation unit shown in FIG. 5;
FIG. 7 shows a construction of a data shuffle unit shown in FIG. 6;
FIG. 8 shows a construction of a data substitution unit shown in FIG. 7;
FIG. 9 shows a construction of a first data diffusion unit shown in FIG. 5;
FIG. 10 shows a construction of a second data diffusion unit shown in FIG. 5;
FIG. 11 is a flowchart showing an overall operation of the reception device;

FIG. 12 is a flowchart showing a decryption operation of the encryption/decryption unit in step S104 shown in FIG. 11;

FIG. 13 is a flowchart showing an encryption operation of the encryption/decryption unit in step S106 shown in FIG. 11;

FIG. 14 shows a construction of a data shuffle unit which is a modification to the embodiment; and

FIG. 15 shows a construction of a data substitution unit shown in FIG. 14.

DESCRIPTION OF THE PREFERRED EMBODIMENT

The following is a description of a cryptographic communication system to which an embodiment of the present invention relates, with reference to drawings.

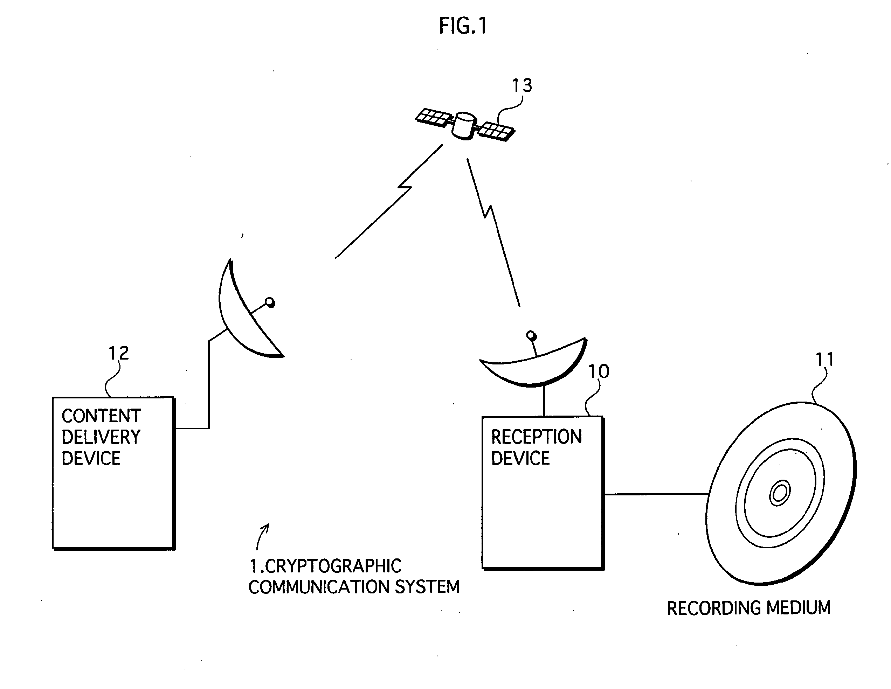

FIG. 1 shows a construction of a cryptographic communication system 1. As illustrated, the cryptographic communication system 1 is roughly made up of a reception device 10, a recording medium 11, a content delivery device 12, and a broadcast satellite 13.

The content delivery device 12 is actually realized by a digital broadcast device. The content delivery device 12 broadcasts encrypted digital content which is superimposed on a digital broadcast wave, via the broadcast satellite 13.

The reception device 10 receives the digital broadcast wave which is broadcast from the content delivery device 12 via the broadcast satellite 13. The reception device 10 extracts the encrypted digital content from the digital broadcast wave, and decrypts the encrypted digital content. The reception device 10 then re-encrypts the decrypted digital content using another key, and writes this re-encrypted digital content onto the recording medium 11.

1. Construction of the Reception Device 10

The following describes a construction of the reception device 10.

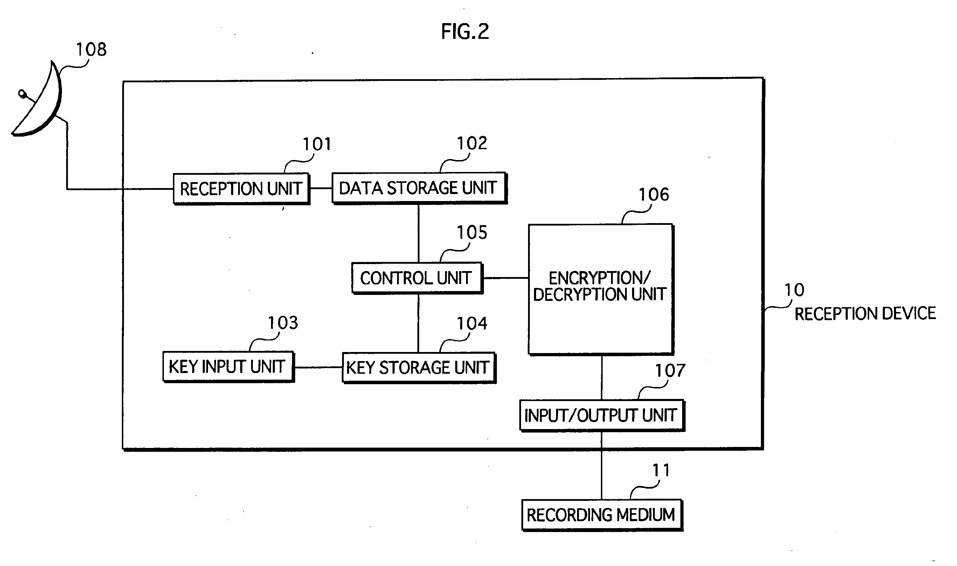

FIG. 2 is a block diagram showing the construction of the reception device 10. As shown in the drawing, the reception device 10 includes a reception unit 101, a data storage unit 102, a key input unit 103, a key storage unit 104, a control unit 105, an encryption/decryption unit 106, an input/output unit 107, and an antenna 108.

The reception device 10 is actually realized by a computer system that has a microprocessor, a ROM, a RAM, a key operating unit, a communication unit, an antenna, and the like. A computer program is stored in the RAM. The functions of the reception device 10 are realized by the microprocessor operating in accordance with this computer program.

(1) Reception Unit 101

The reception unit 101 receives the digital broadcast wave from the content delivery device 12 through the antenna 108. The reception unit 101 extracts ciphertext data $C_1$ which is the encrypted digital content, from the received digital broadcast wave. The reception unit 101 writes ciphertext data $C_1$ to the data storage unit 102.

Ciphertext data $C_1$ referred to here has been generated by the content delivery device 12, by encrypting plaintext data P using 1280-bit key data $K_1$.

(2) Data Storage Unit 102

The data storage unit 102 stores ciphertext data $C_1$ output from the reception unit 101. The data storage unit 102 also stores plaintext data P output from the encryption/decryption unit 106.

(3) Key Input Unit 103

The key input unit 103 receives an input of 1280-bit key data $K_1$ used for decrypting ciphertext data $C_1$ into plaintext data P, and writes key data $K_1$ to the key storage unit 104.

The key input unit 103 also receives an input of 1280-bit key data $K_2$ used for re-encrypting plaintext data P, which is obtained by decrypting ciphertext data $C_1$ using key data $K_1$, into ciphertext data $C_2$. The key input unit 103 writes key data $K_2$ to the key storage unit 104.

Here, key data $K_2$ is different from key data $K_1$.

(4) Key Storage Unit 104

The key storage unit 104 receives key data $K_1$ and key data $K_2$ from the key input unit 103, and stores them.

(5) Control Unit 105

The control unit 105 exercises the following control when decrypting ciphertext data $C_1$.

The control unit 105 instructs the encryption/decryption unit 106 to read key data $K_1$ stored in the key storage unit 104. The control unit 105 also sets a flag held in a switch unit 220 in the encryption/decryption unit 106, to "1". After this, the control unit 105 divides ciphertext data $C_1$ stored in the data storage unit 102 into partial data in units of 128 bits, starting from the most significant bit. The control unit 105 sequentially outputs these 128-bit partial data to the encryption/decryption unit 106, in the order in which they were divided.

Meanwhile, the control unit 105 exercises the following control when encrypting plaintext data P.

The control unit 105 instructs the encryption/decryption unit 106 to read key data $K_2$ stored in the key storage unit 104. The control unit 105 also sets the flag held in the switch unit 220 in the encryption/decryption unit 106, to "0". After this, the control unit 105 divides plaintext data P stored in the data storage unit 102 into partial data in units of 128 bits, starting from the most significant bit. The control unit 105 sequentially outputs these 128-bit partial data to the encryption/decryption unit 106, in the order in which they were divided.

(6) Encryption/Decryption Unit 106

The encryption/decryption unit 106 receives key data $K_1$ and ciphertext data $C_1$ from the control unit 105, and decrypts ciphertext data $C_1$ into plaintext data P using key data $K_1$. Here, the encryption/decryption unit 106 performs decryption in units of 128 bits in the order in which the partial data of ciphertext data $C_1$ is output from the control unit 105. By repeating such 128-bit decryption, the encryption/decryption unit 106 obtains plaintext data P. The encryption/decryption unit 106 writes plaintext data P obtained in this way, into the data storage unit 102 through the control unit 105.

Also, the encryption/decryption unit 106 receives key data $K_2$ and plaintext data P from the control unit 105, and encrypts plaintext data P into ciphertext data $C_2$ using key data $K_2$. Here, the encryption/decryption unit 106 performs encryption in units of 128 bits in the order in which the partial data of plaintext data P is output from the control unit 105, as in the case of the above decryption. By repeating such 128-bit encryption, the encryption/decryption unit 106 obtains ciphertext data $C_2$. The encryption/decryption unit 106 outputs ciphertext data $C_2$ obtained as a result of this re-encryption, to the input/output unit 107.

The following describes the encryption/decryption unit 106 in greater detail.

(Construction of the Encryption/Decryption Unit 106)

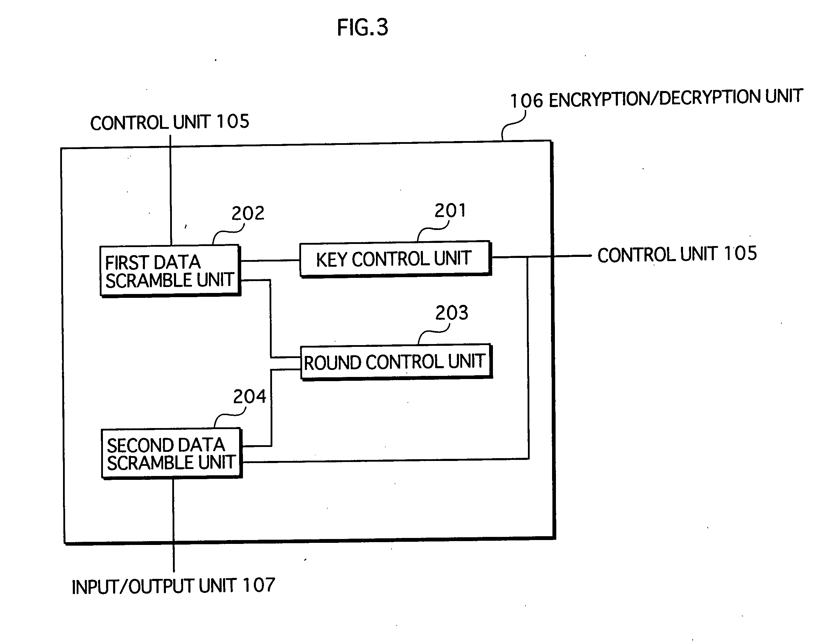

FIG. 3 is a block diagram showing a construction of the encryption/decryption unit 106. As shown in the drawing, the encryption/decryption unit 106 includes a key control unit 201, a first data scramble unit 202, a round control unit 203, and a second data scramble unit 204.

The key control unit 201 receives 1280-bit key data $K_1$ from the key storage unit 104 through the control unit 105. The key control unit 201 divides 1280-bit key data $K_1$ into 128-bit partial keys $K_10, K_11, ... , K_19$, starting from the most significant bit. When 128-bit partial data of ciphertext data $C_1$ is first input in the first data scramble unit 202, the key control unit 201 outputs partial key $K_10$ to the first data scramble unit 202. Subsequently, the key control unit 201 outputs a partial key in the order of $K_11, K_12, ... , K_19$, each time 128-bit partial data is input in the first data scramble unit 202.

In the same manner, the key control unit 201 receives 1280-bit key data $K_2$ from the key storage unit 104 through the control unit 105. The key control unit 201 divides 1280-bit key data $K_2$ into 128-bit partial keys $K_20, K_21, ... , K_29$, starting from the most significant bit. When 128-bit partial data of plaintext data P is first input in the first data scramble unit 202, the key control unit 201 outputs partial key $K_20$ to the first data scramble unit 202. Subsequently, the key control unit 201 outputs a partial key in the order of $K_21, K_22, ... , K_29$, each time 128-bit partial data is input in the first data scramble unit 202.

The first data scramble unit 202 receives 128-bit partial data from the control unit 105. The first data scramble unit 202 also receives a 128-bit partial key from the key control unit 201. The first data scramble unit 202 performs a nonlinear transformation on the 128-bit partial data, and further performs a linear transformation on the nonlinearly-transformed partial data using the partial key. The first data scramble unit 202 outputs the resulting 128-bit partial data to the round control unit 203. This first data scramble unit 202 is explained in more detail later.

The round control unit 203 receives the 128-bit partial data from the first data scramble unit 202. The round control unit 203 keeps count of the number of times it has received 128-bit partial data from the first data scramble unit 202. When the count reaches ten, the round control unit 203 outputs the 128-bit partial data to the second data scramble unit 204 and resets the count. If the count is below ten, the round control unit 203 outputs the 128-bit partial data back to the first data scramble unit 202.

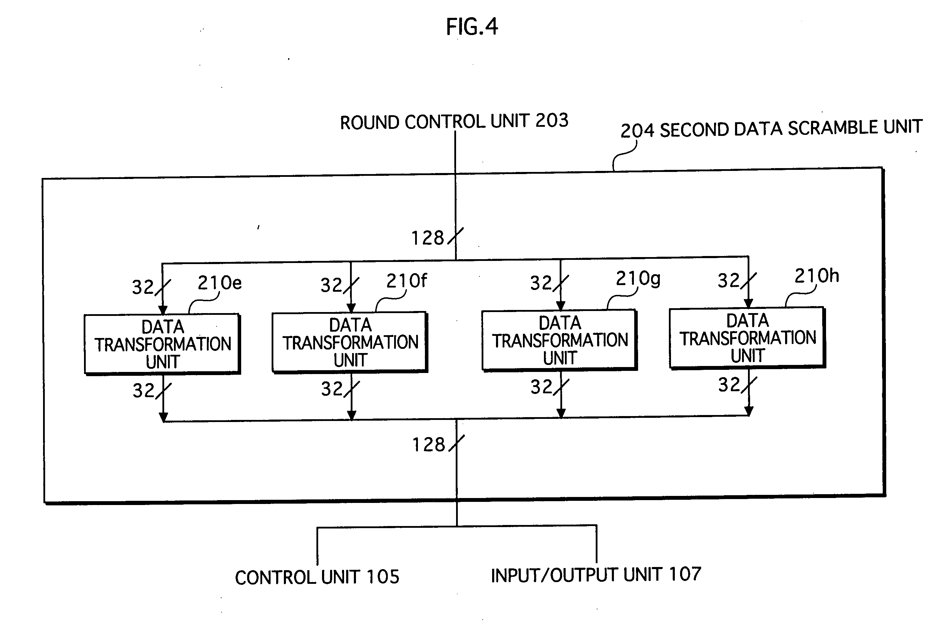

FIG. 4 shows a construction of the second data scramble unit 204. As illustrated, the second data scramble unit 204 includes data transformation units 210e, 210f, 210g, and 210h.

In the case of decryption, the second data scramble unit 204 receives 128-bit partial data from the round control unit 203, and divides it into four 32-bit data blocks starting from the most significant bit. The four 32-bit data blocks are input respectively to the data transformation units 210e-210h, in the order in which they were divided. Each of the data transformation units 210e-210h performs the nonlinear transformation on its input 32-bit data block. The four 32-bit data blocks output from the data transformation units 210e-210h as a result of this nonlinear transformation are connected to form 128-bit partial data, which is then output to the data storage unit 102 via the control unit 105.

In the case of encryption, likewise, the second data scramble unit 204 receives 128-bit partial data from the round control unit 203 and divides it into four 32-bit data blocks starting from the most significant bit. The four 32-bit data blocks are input respectively to the data transformation units 210e-210h, in the order in which they were divided. Each of the data transformation units 210e-210h performs the nonlinear transformation on its input 32-bit data block. Four 32-bit data blocks output from the data transformation units 210e-210h as a result of this nonlinear transformation are connected to form 128-bit partial data, which is then output to the input/output unit 107.

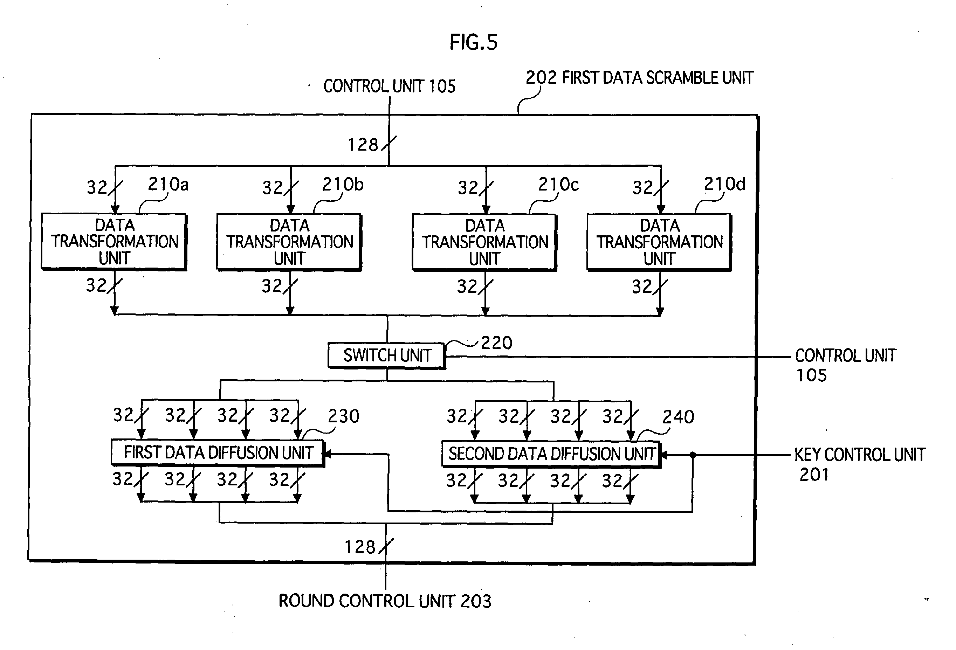

Although the second data scramble unit 204 is shown as an independent construction element in FIG. 3 for ease of explanation, actually the data transformation units 210e-210h of the second data scramble unit 204 share a circuit with data transformation units 210a-210d of the first data scramble unit 202 shown in FIG. 5. Each of these data transformation units is explained in detail later.

(Construction of the First Data Scramble Unit 202)

FIG. 5 is a block diagram showing a construction of the first data scramble unit 202. In the drawing, the first data scramble unit 202 includes the data transformation units 210a-210d, the switch unit 220, a first data diffusion unit 230, and a second data diffusion unit 240.

The first data scramble unit 202 receives 128-bit partial data from the control unit 105, and divides it into four 32-bit data blocks starting from the most significant bit. The four 32-bit data blocks are input respectively to the data transformation units 210a-210d, in the order in which they were divided.

Each of the data transformation units 210a-210d receives a 32-bit data block, performs the nonlinear transformation on the 32-bit data block, and outputs the result to the switch unit 220. Each data transformation unit is explained in more detail later.

The switch unit 220 receives four 32-bit data blocks from the data transformation units 210a-210d.

The switch unit 220 holds the flag that shows the output destination of the data blocks received from the data transformation units 210a-210d. This flag takes "0" or "1". If the flag is "0", the data blocks are output to the first data diffusion unit 230. If the flag is "1", the data blocks are output to the second data diffusion unit 240. The switch unit 220 is connected to the control unit 105, and switches the flag when instructed by the control unit 105.

Upon receiving the four 32-bit data blocks, the switch unit 220 refers to the flag held therein. If the flag is "0", the switch unit 220 outputs the data blocks to the first data diffusion unit 230. If the flag is "1", the switch unit 220 outputs the data blocks to the second data diffusion unit 240.

The first data diffusion unit 230 is used when encrypting plaintext data P into ciphertext data $C_2$. The first data diffusion unit 230 receives four 32-bit data blocks from the data transformation units 210a-210d via the switch unit 220. Also, the first data diffusion unit 230 is connected to the key control unit 201, and receives a partial key from the key control unit 201. The first data diffusion unit 230 performs a linear transformation on the four 32-bit data blocks using the partial key, and outputs the result to the round control unit 203.

The second data diffusion unit 240 is used when decrypting ciphertext data $C_1$ into plaintext data P. The second data diffusion unit 240 receives four 32-bit data blocks from the data transformation units 210a-210d via the switch unit 220. Also, the second data diffusion unit 240 is connected to the key control unit 201, and receives a partial key from the key control unit 201. The second data diffusion unit 240 performs a linear transformation on the four 32-bit data blocks using the partial key, and outputs the result to the round control unit 203.

The first data diffusion unit 230 and the second data diffusion unit 240 are explained in more detail later.

(Construction of the Data Transformation Unit 210a)

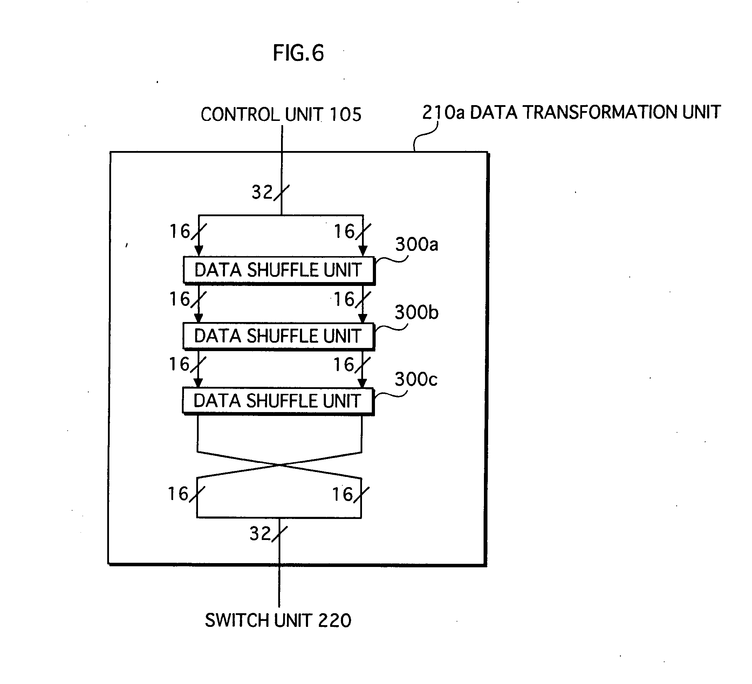

FIG. 6 shows a construction of the data transformation unit 210a.

In the drawing, the data transformation unit 210a includes data shuffle units 300a, 300b, and 300c. The transformation performed by the data transformation unit 210a is an involution. An involution refers to such an operation that recovers the original data when repeated twice. In other words, an involution is an operation that is equal to its own inverse.

A 32-bit data block input in the data transformation unit 210a is divided into the higher-order 16-bit data and the lower-order 16-bit data, and then input in the data shuffle unit 300a. The data shuffle unit 300a shuffles these two sets of 16-bit data and outputs them to the data shuffle unit 300b. The data shuffle unit 300b shuffles the two sets of 16-bit data and outputs them to the data shuffle unit 300c. The data shuffle unit 300c shuffles the two sets of 16-bit data and outputs them. The higher-order 16-bit data and the lower-order 16-bit data output from the data shuffle unit 300c are transposed (i.e. exchanged in position) and then connected to form a 32-bit data block. This 32-bit data block is the output data of the data transformation unit 210a.

The data transformation units 210b-210h have the same construction as the data transformation unit 210a, so that their explanation has been omitted here.

(Construction of the Data Shuffle Unit 300a)

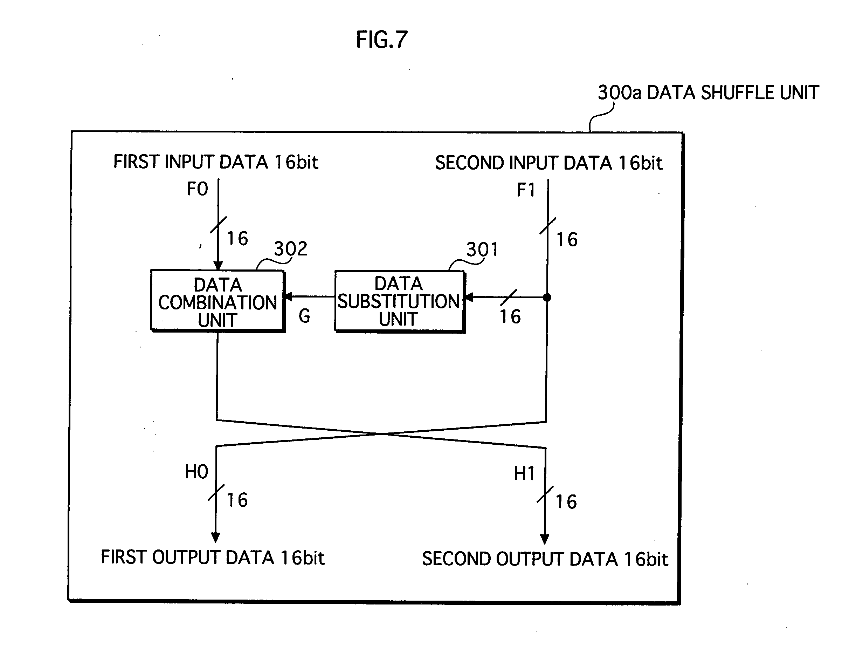

FIG. 7 shows a construction of the data shuffle unit 300a.

In the drawing, the data shuffle unit 300a includes a data substitution unit 301 and a data combination unit 302. Here, the higher-order 16-bit data and the lower-order 16-bit data input in the data shuffle unit 300a are denoted respectively as first input data F0 and second input data F1. Also, the higher-order 16-bit data and the lower-order 16-bit data output from the data shuffle unit 300a are denoted respectively as first output data H0 and second output data H1. This being so, first input data F0 is input in the data combination unit 302, whilst second input data F1 is output as first output data H0 and at the same time is input in the data substitution unit 301.

The data substitution unit 301 performs data substitution on second input data F1 and outputs the outcome as 16-bit data G. 16-bit data G is input in the data combination unit 302.

The data combination unit 302 performs a bitwise exclusive-OR operation on 16-bit data G and first input data F0, and outputs the result as second output data H1.

The data shuffle units 300b and 300c have the same construction as the data shuffle unit 300a, so that their explanation has been omitted here.

(Construction of the Data Substitution Unit 301)

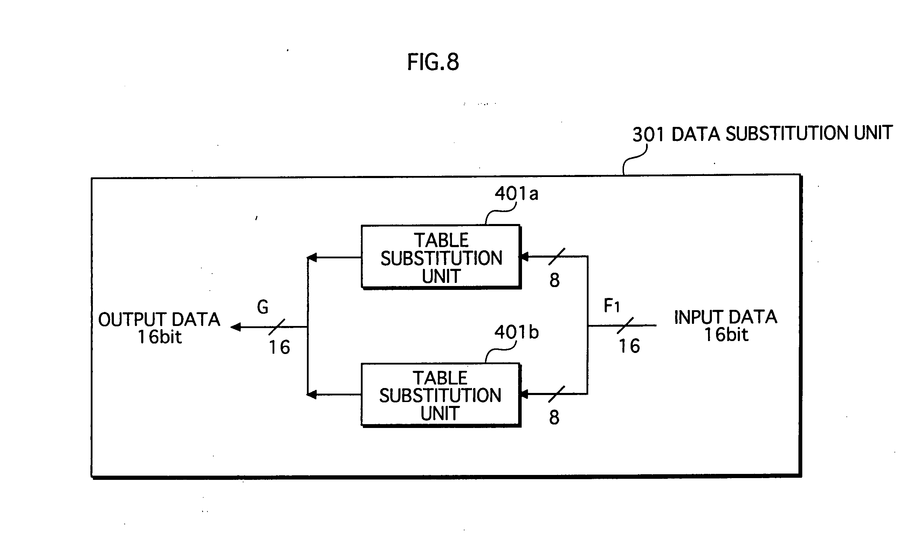

FIG. 8 shows a construction of the data substitution unit 301.

In the drawing, the data substitution unit 301 includes table substitution units 401a and 401b. Second input data F1 input in the data substitution unit 301 is divided into the higher-order 8-bit data and the lower-order 8-bit data. The higher-order 8-bit data and the lower-order 8-bit data are then input in the table substitution units 401a and 401b respectively.

Each of the table substitution units 401a and 401b has a substitution table in which different 8-bit data is stored in each of 256 locations. When 8-bit data is input, each of the table substitution units 401a and 401b reads 8-bit data stored in a location indicated by the input 8-bit data, and outputs the read 8-bit data. Note here that the table substitution units 401a and 401b have the same substitution table. A specific example of such a table is 256×8-bit data described in S. Moriai et al. "Constructing an S-box in Consideration of Security against Known Block Cipher Attacks" *Technical Report of the Proceeding of the Institute of Electronics, Information and Communication Engineers,* ISEC98-13.

The data substitution unit 301 connects the 8-bit data output from the table substitution unit 401a and the 8-bit data output from the table substitution unit 401b, and outputs the result to the data combination unit 302 as 16-bit data G.

(Construction of the First Data Diffusion Unit 230)

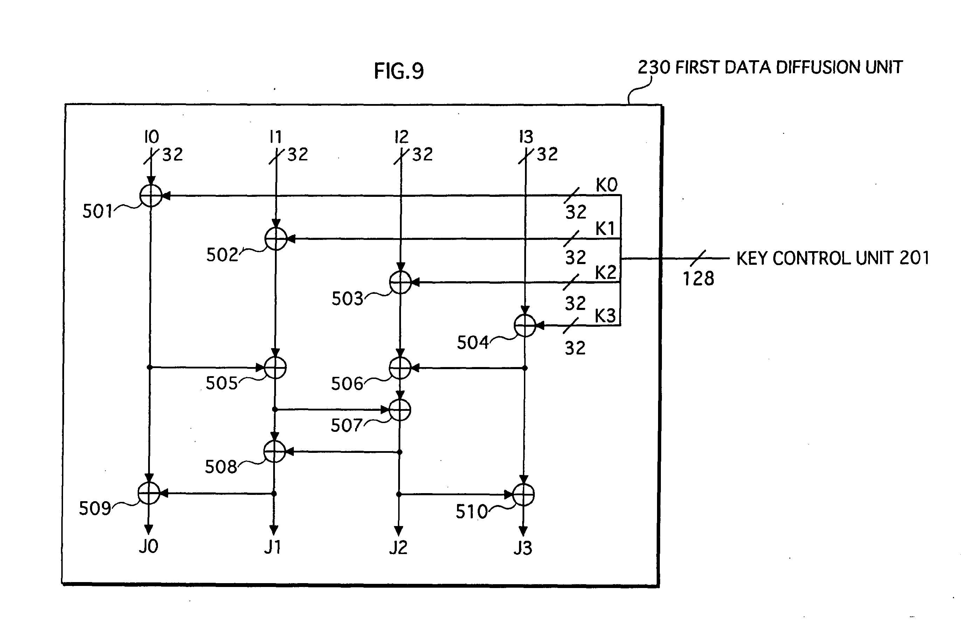

FIG. 9 shows a construction of the first data diffusion unit 230 shown in FIG. 5. In the drawing, the first data diffusion unit 230 includes ten exclusive-OR units 501 to 510.

The first data diffusion unit 230 receives 32-bit data block I0 from the data transformation unit 210a through the switch unit 220. The first data diffusion unit 230 also receives 32-bit data block I1 from the data transformation unit 210b through the switch unit 220. The first data diffusion unit 230 also receives 32-bit data block I2 from the data transformation unit 210c through the switch unit 220. The first data diffusion unit 230 also receives 32-bit data block I3 from the data transformation unit 210d through the switch unit 220. Furthermore, the first data diffusion unit 230 receives a 128-bit partial key from the key control unit 201, and divides it into four sets of 32-bit key data starting from the most significant bit. Here, the four sets of 32-bit key data are denoted by K0, K1, K2, and K3 in the order in which they were divided.

The exclusive-OR unit 501 receives 10 and K0, and performs a bitwise exclusive-OR operation on I0 and K0. The exclusive-OR unit 501 outputs the result to the exclusive-OR units 505 and 509.

The exclusive-OR unit 502 receives I1 and K1, and performs a bitwise exclusive-OR operation on I1 and K1.

The exclusive-OR unit 502 outputs the result to the exclusive-OR unit 505.

The exclusive-OR unit 503 receives I2 and K2, and performs a bitwise exclusive-OR operation on I2 and K2. The exclusive-OR unit 503 outputs the result to the exclusive-OR unit 506.

The exclusive-OR unit 504 receives I3 and K3, and performs a bitwise exclusive-OR operation on I3 and K3. The exclusive-OR unit 504 outputs the result to the exclusive-OR units 506 and 510.

The exclusive-OR unit 505 receives the calculation result of the exclusive-OR unit 501 and the calculation result of the exclusive-OR unit 502, and performs a bitwise exclusive-OR operation on these two values. The exclusive-OR unit 505 outputs the result to the exclusive-OR units 507 and 508.

The exclusive-OR unit 506 receives the calculation result of the exclusive-OR unit 503 and the calculation result of the exclusive-OR unit 504, and performs a bitwise exclusive-OR operation on these two values. The exclusive-OR unit 506 outputs the result to the exclusive-OR unit 507.

The exclusive-OR unit 507 receives the calculation result of the exclusive-OR unit 505 and the calculation result of the exclusive-OR unit 506, and performs a bitwise exclusive-OR operation on these two values. The exclusive-OR unit 507 outputs the result to the exclusive-OR units 508 and 510, and at the same time outputs the result as output data J2.

The exclusive-OR unit 508 receives the calculation result of the exclusive-OR unit 505 and the calculation result of the exclusive-OR unit 507, and performs a bitwise exclusive-OR operation on these two values. The exclusive-OR unit 508 outputs the result to the exclusive-OR unit 509, and at the same time outputs the result as output data J1.

The exclusive-OR unit 509 receives the calculation result of the exclusive-OR unit 501 and the calculation result of the exclusive-OR unit 508, and performs a bitwise exclusive-OR operation on these two values. The exclusive-OR unit 509 outputs the result as output data J0.

The exclusive-OR unit 510 receives the calculation result of the exclusive-OR unit 504 and the calculation result of the exclusive-OR unit 507, and performs a bitwise exclusive-OR operation on these two values. The exclusive-OR unit 510 outputs the result as output data J3.

In sum, output data J0, J1, J2, and J3 can be expressed as follows:

$$J0=K0(+)K2(+)K3(+)I0(+)I2(+)I3 \qquad \text{(Equation 1)}$$

$$J1=K2(+)K3(+)I2(+)I3 \qquad \text{(Equation 2)}$$

$$J2=K0(+)K1(+)K2(+)K3(+)I0(+)I1(+)I2(+)I3 \qquad \text{(Equation 3)}$$

$$J3=K0(+)K1(+)K2(+)I0(+)I1(+)I2 \qquad \text{(Equation 4)}$$

where (+) denotes a bitwise exclusive-OR operation.

The first data diffusion unit 230 performs the above processing, each time it receives four 32-bit data blocks from the data transformation units 210a-210d and a 128-bit partial key from the key control unit 201.

The first data scramble unit 202 connects J0, J1, J2, and J3 output from the first data diffusion unit 230 in this order, and outputs the resulting 128-bit partial data.

(Construction of the Second Data Diffusion Unit 240)

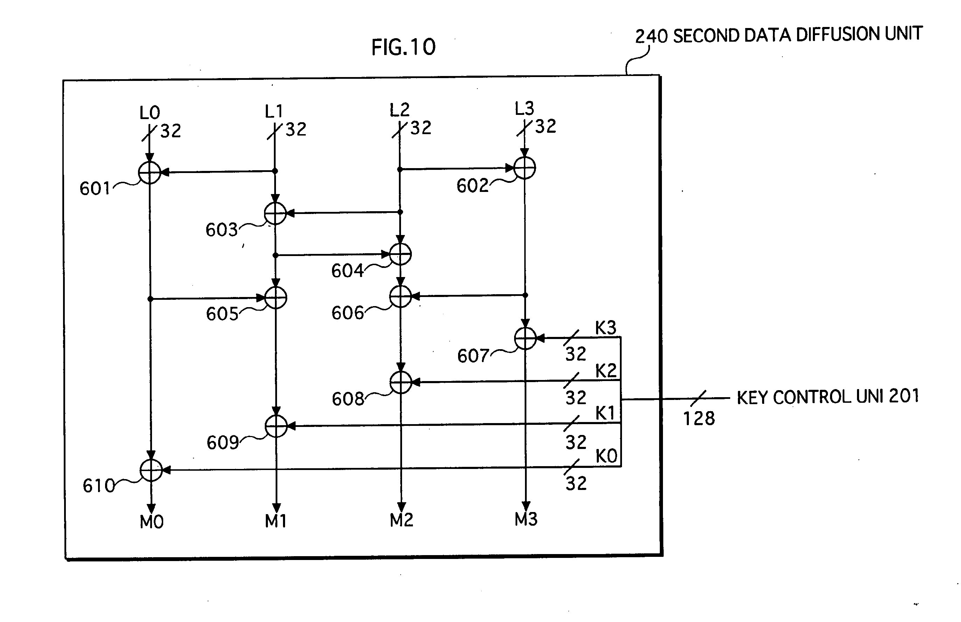

FIG. 10 shows a construction of the second data diffusion unit 240 shown in FIG. 5.

In the drawing, the second data diffusion unit 240 includes ten exclusive-OR units 601 to 610.

The second data diffusion unit 240 receives 32-bit data block L0 from the data transformation unit 210a through the switch unit 220. The second data diffusion unit 240 also receives 32-bit data block L1 from the data transformation unit 210b through the switch unit 220. The second data diffusion unit 240 also receives 32-bit data block L2 from the data transformation unit 210c through the switch unit 220. The second data diffusion unit 240 also receives 32-bit data block L3 from the data transformation unit 210d through the switch unit 220. Furthermore, the second data diffusion unit 240 receives a 128-bit partial key from the key control unit 201, and divides it into four sets of 32-bit key data starting from the most significant bit. Here, the four sets of 32-bit key data are denoted by K0, K1, K2, and K3 in the order in which they were divided.

The exclusive-OR unit 601 receives L0 and L1, and performs a bitwise exclusive-OR operation on L0 and L1.

The exclusive-OR unit 601 outputs the result to the exclusive-OR units 605 and 610.

The exclusive-OR unit 602 receives L2 and L3, and performs a bitwise exclusive-OR operation on L2 and L3. The exclusive-OR unit 602 outputs the result to the exclusive-OR units 606 and 607.

The exclusive-OR unit 603 receives L1 and L2, and performs a bitwise exclusive-OR operation on L1 and L2. The exclusive-OR unit 603 outputs the result to the exclusive-OR units 604 and 605.

The exclusive-OR unit 604 receives L2 and the calculation result of the exclusive-OR unit 603, and performs a bitwise exclusive-OR operation on these two values. The exclusive-OR unit 604 outputs the result to the exclusive-OR unit 606.

The exclusive-OR unit 605 receives the calculation result of the exclusive-OR unit 601 and the calculation result of the exclusive-OR unit 603, and performs a bitwise exclusive-OR operation on these two values. The exclusive-OR unit 605 outputs the result to the exclusive-OR unit 609.

The exclusive-OR unit 606 receives the calculation result of the exclusive-OR unit 602 and the calculation result of the exclusive-OR unit 604, and performs a bitwise exclusive-OR operation on these two values. The exclusive-OR unit 606 outputs the result to the exclusive-OR unit 608.

The exclusive-OR unit 607 receives K3 and the calculation result of the exclusive-OR unit 602, and performs a bitwise exclusive-OR operation on these two values. The exclusive-OR unit 607 outputs the result as output data M3.

The exclusive-OR unit 608 receives K2 and the calculation result of the exclusive-OR unit 606, and performs a bitwise exclusive-OR operation on these two values. The exclusive-OR unit 608 outputs the result as output data M2.

The exclusive-OR unit 609 receives K1 and the calculation result of the exclusive-OR unit 605, and performs a bitwise exclusive-OR operation on these two values. The exclusive-OR unit 609 outputs the result as output data M1.

The exclusive-OR unit 610 receives K0 and the calculation result of the exclusive-OR unit 601, and performs a bitwise exclusive-OR operation on these two values. The exclusive-OR unit 610 outputs the result as output data M0.

In sum, output data M0, M1, M2, and M3 can be expressed as follows:

$$M0=K0(+)L0(+)L1 \hspace{4cm} \text{(Equation 5)}$$

$$M1=K1(+)L0(+)L2 \hspace{4cm} \text{(Equation 6)}$$

$$M2=K2(+)L1(+)L2(+)L3 \hspace{3cm} \text{(Equation 7)}$$

$$M3=K3(+)L2(+)L3 \hspace{4cm} \text{(Equation 8)}$$

where (+) denotes a bitwise exclusive-OR operation.

The second data diffusion unit 240 performs the above processing, each time it receives four 32-bit data blocks from the data transformation units 210a-210d and a 128-bit partial key from the key control unit 201.

The first data scramble unit 202 connects M0, M1, M2, and M3 output from the second data diffusion unit 240 in this order, and outputs the resulting 128-bit partial data.

(Relationship between Encryption and Decryption)

The following explains the relationship between encryption and decryption performed by the encryption/decryption unit 106.

The transformation performed by each of the data transformation units 210a-210d shown in FIG. 5 and the transformation performed by each of the data transformation units 210e-210h shown in FIG. 4 are the exact same transformation. This transformation is an involution.

Let

$$Y=F(X)$$

denote an operation of dividing 128-bit data X into 32-bit data blocks starting from the most significant bit, performing the above data transformation on each of these data blocks, and connecting the resulting data blocks as 128-bit data Y. Since the data transformation is an involution,

$$X=F(F(X)) \qquad \text{(Equation 9)}$$

holds true.

Next, suppose the output of the first data diffusion unit 230 and the input of the second data diffusion unit 240 are equal to each other, and also the partial key used by the first data diffusion unit 230 and the partial key used by the second data diffusion unit 240 are equal to each other. Which is to say, suppose J0=L0, J1=L1, J2=L2, J3=L3 in Equations 1-8, with K0-K3 in Equations 1-4 being the same as K0-K3 in Equations 5-8. This being so, M0-M3 output from the second data diffusion unit 240 can be written as

$$M0=K0(+)J0(+)J1 \qquad \text{(Equation 10)}$$

$$M1=K1(+)J0(+)J2 \qquad \text{(Equation 11)}$$

$$M2=K2(+)J1(+)J2(+)J3 \qquad \text{(Equation 12)}$$

$$M3=K3(+)J2(+)J3 \qquad \text{(Equation 13)}$$

Substituting Equations 1-4 into Equations 10-13 yields

$$M0=I0$$

$$M1=I1$$

$$M2=I2$$

$$M3=I3$$

This indicates that, given the same partial key, the second data diffusion unit 240 is the inverse of the first data diffusion unit 230.

Let

$$Y=G1(K,X)$$

denote an operation of dividing 128-bit data X into 32-bit data blocks starting from the most significant bit, inputting the data blocks into the first data diffusion unit 230 together with partial key K, and connecting the resulting data blocks as 128-bit data Y. Also, let

$$Y=G2(K,X)$$

denote an operation of dividing 128-bit data X into 32-bit data blocks starting from the most significant bit, inputting the data blocks into the second data diffusion unit 240 together with partial key K, and connecting the resulting data blocks as 128-bit data Y. This being so,

$$X=G2(K,G1(K,X)) \qquad \text{(Equation 14)}$$

holds true, due to the inverse relationship between the first data diffusion unit 230 and the second data diffusion unit 240.

Based on the above, the relationship between encryption and decryption performed by the encryption/decryption unit 106 in the reception device 10 is explained below.

The encryption/decryption unit 106 computes 128-bit ciphertext C from 128-bit plaintext P, as follows.

$$T0=G1(K0,F(P)) \qquad \text{(Equation 15)}$$

$$T1=G1(K1,F(T0)) \qquad \text{(Equation 16)}$$

$$T2=G1(K2,F(T1)) \qquad \text{(Equation 17)}$$

.....

$$T9=G1(K9,F(T8)) \qquad \text{(Equation 18)}$$

$$C=F(T9) \qquad \text{(Equation 19)}$$

On the other hand, the encryption/decryption unit 106 computes 128-bit decrypted text D from such computed ciphertext C, as follows. Here, the same key data K0-K9 are used in the encryption and the decryption.

$$U0=G2(K9,F(C)) \qquad \text{(Equation 20)}$$

$$U1=G2(K8,F(U0)) \qquad \text{(Equation 21)}$$

$$U2=G2(K7,F(U1)) \qquad \text{(Equation 22)}$$

.....

$$U9=G2(K0,F(U8)) \qquad \text{(Equation 23)}$$

$$D=F(U9) \qquad \text{(Equation 24)}$$

Substituting Equation 19 into Equation 20 yields

$$U0=G2(K9,F(F(T9)))$$

This can be transformed into

$$U0=G2(K9,T9)$$

according to Equation 9.

Next, substituting Equation 18 into this equation yields

$$U0=G2(K9,G1(K9,F(T8)))$$

This can be transformed into

$$U0=F(T8)$$

according to Equation 14.

Substituting this equation into Equation 21 yields

$$U1=G2(K8,T8)$$

Repeating the same equation transformation will eventually result in

$$P=D$$

This indicates that, given the same key, the decryption performed by the encryption/decryption unit 106 is the inverse of the encryption performed by the encryption/decryption unit 106.

(Decryption of Ciphertext Data $C_2$)

Accordingly, the encryption/decryption unit 106 can decrypt ciphertext data $C_2$, which it has generated by encrypting plaintext data P using key data $K_2$, into plaintext data P by performing the same operation as the above decryption of ciphertext data $C_1$ while using key data $K_2$ instead of key data $K_1$.

In more detail, the switch unit 220 in the encryption/decryption unit 106 sets the flag to "1", in accordance with an instruction from the control unit 105. Also, the input/output unit 107 reads ciphertext data $C_2$ from the recording medium 11 and outputs it to the encryption/decryption unit 106, in accordance with an instruction from the control unit 105. The control unit 105 reads key data $K_2$ from the key storage unit 104 and outputs it to the encryption/decryption unit 106.

The encryption/decryption unit 106 receives ciphertext data $C_2$ and key data $K_2$. In the same manner as the aforedescribed decryption of ciphertext data $C_1$ into plaintext data P, the encryption/decryption unit 106 subjects ciphertext data $C_2$ to the processing of the first data scramble unit 202 using key data $K_2$, and then subjects the outcome to the processing of the second data scramble unit 204. As a result, plaintext data P is obtained. Since the flag in the switch unit 220 is set at "1", the second data diffusion unit 240 is used in the first data scramble unit 202.

(7) Input/Output Unit 107

The input/output unit 107 is actually realized by a DVD-RAM drive unit. Here, the recording medium 11 is a DVD-RAM. The input/output unit 107 writes digital content onto the recording medium 11, or reads digital content from the recording medium 11.

2. Operation of the Reception Device 10

(Overall Operation)

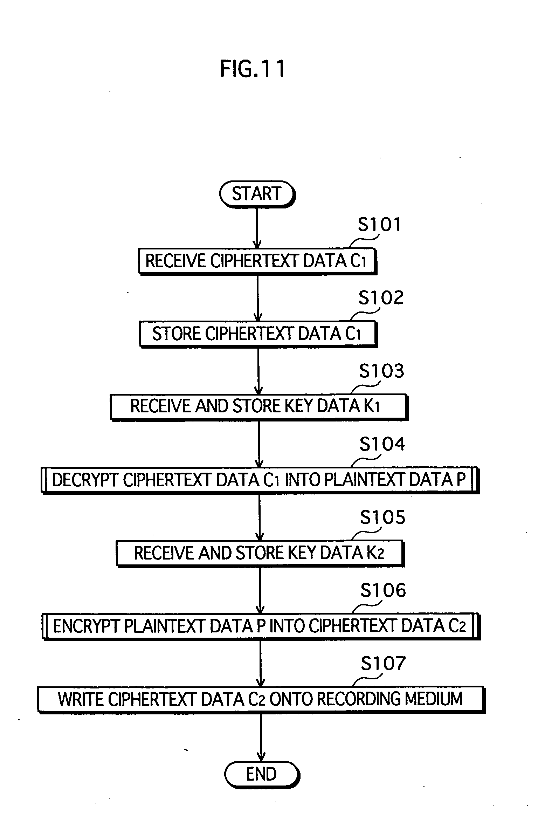

An operation of the reception device 10 is explained below, by referring to FIGS. 11 to 13.

FIG. 11 is a flowchart showing an overall operation of the reception device 10.

The reception unit 101 receives ciphertext data $C_1$ from the content delivery device 12, via the broadcast satellite 13 and the antenna 108 (S101). Here, ciphertext data $C_1$ has been generated by encrypting plaintext data P that is digital content. The reception unit 101 outputs ciphertext data $C_1$ to the data storage unit 102. The data storage unit 102 stores ciphertext data $C_1$ (S102).

The key input unit 103 receives an input of key data $K_1$ that is a decryption key for decrypting ciphertext data $C_1$ into plaintext data P. The key input unit 103 outputs key data $K_1$ to the key storage unit 104. The key storage unit 104 stores key data $K_1$ (S103).

The encryption/decryption unit 106 decrypts ciphertext data $C_1$ into plaintext data P, using key data $K_1$ (S104).

Following this, the key input unit 103 receives an input of key data $K_2$ that is an encryption key for re-encrypting plaintext data P, which has been decrypted by the encryption/decryption unit 106, into ciphertext data $C_2$. The key input unit 103 outputs key data $K_2$ to the key storage unit 104. The key storage unit 104 stores key data $K_2$ (S105).

The encryption/decryption unit 106 encrypts plaintext data P into ciphertext data $C_2$, using key data $K_2$ (S106).

The input/output unit 107 writes ciphertext data $C_2$ onto the recording medium 11 (S107).

(Decryption)

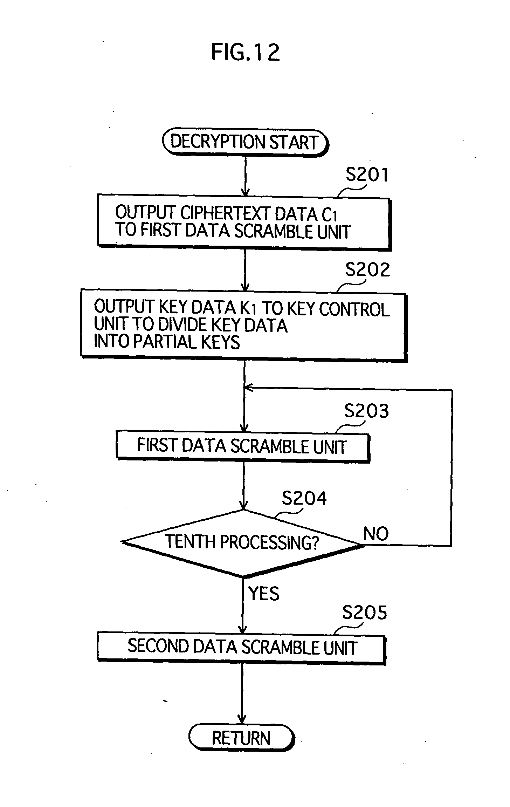

FIG. 12 is a flowchart showing the decryption performed in step S104 in FIG. 11. Since the encryption/decryption unit 106 performs decryption in units of 128 bits, the size of ciphertext data $C_1$ is assumed here to be 128 bits for ease of explanation.

The control unit 105 reads 128-bit ciphertext data $C_1$ from the data storage unit 102, and outputs it to the first data scramble unit 202 in the encryption/decryption unit 106 (S201). The control unit 105 also reads 1280-bit key data $K_1$ from the key storage unit 104, and outputs it to the key control unit 201 in the encryption/decryption unit 106. The key control unit 201 divides key data $K_1$ starting from the most significant bit, into ten 128-bit partial keys (S202). The key control unit 201 outputs the ten 128-bit partial keys one by one to the first data scramble unit 202, in the order in which they were divided. The first data scramble unit 202 processes 128-bit ciphertext data $C_1$ using a partial key (S203). The round control unit 203 in the encryption/decryption unit 106 judges whether the number of times the first data scramble unit 202 has performed the processing reaches ten (S204). If the number is below ten (S204:NO), the procedure returns to step S203 where 128-bit data output from the first data scramble unit 202 is input again in the first data scramble unit 202. If the number reaches ten (S204:YES), 128-bit data output from the first data scramble unit 202 is input in and processed by the second data scramble unit 204 (S205).

Though the operation of decrypting 128-bit ciphertext data $C_1$ is explained in this example, in reality the size of ciphertext data $C_1$ is likely to be more than 128 bits. In such a case, the above operation is repeated in units of 128 bits, until all of ciphertext data $C_1$ are decrypted.

(Encryption)

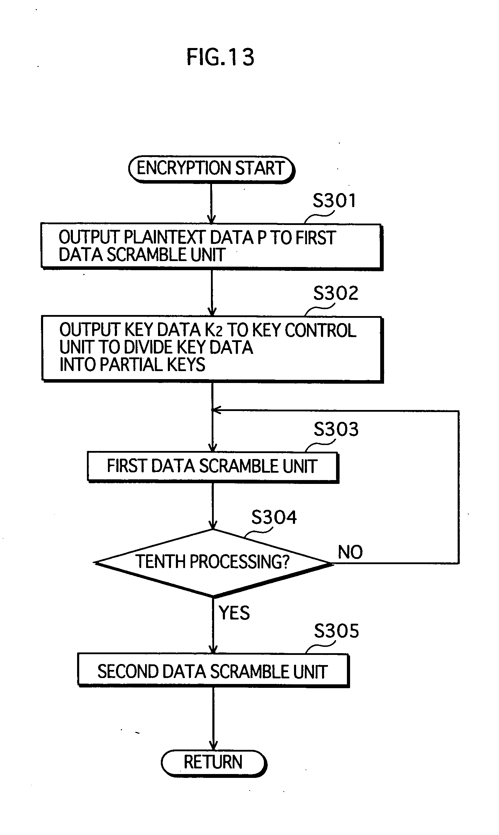

FIG. 13 is a flowchart showing the encryption performed in step S106 in FIG. 11. Since the encryption/decryption unit 106 performs encryption in units of 128 bits, the size of plaintext data P is assumed here to be 128 bits for ease of explanation.

The control unit 105 reads 128-bit plaintext data P from the data storage unit 102, and outputs it to the first data scramble unit 202 in the encryption/decryption unit 106 (S301). The control unit 105 also reads 1280-bit key data $K_2$ from the key storage unit 104, and outputs it to the key control unit 201 in the encryption/decryption unit 106. The key control unit 201 divides key data $K_2$ starting from the most significant bit, into ten 128-bit partial keys (S302). The key control unit 201 outputs the ten 128-bit partial keys one by one to the first data scramble unit 202, in the order in which they were divided. The first data scramble unit 202 processes 128-bit plaintext data P using a partial key (S303). The round control unit 203 in the encryption/decryption unit 106 judges whether the number of times the first data scramble unit 202 has performed the processing reaches ten (S304). If the number is below ten (S304:NO), the procedure returns to step S303 where 128-bit data output from the first data scramble unit 202 is input again in the first data scramble unit 202. If the number reaches ten (S304:YES), 128-bit data output from the first data scramble unit 202 is input in and processed by the second data scramble unit 204 (S305).

Though the operation of encrypting 128-bit plaintext data P is explained in this example, in reality the size of plaintext data P is likely to be more than 128 bits. In such a case, the above operation is repeated in units of 128 bits until all of plaintext data P are encrypted.

3. Construction of the Content Delivery Device 12

The content delivery device 12 is actually realized by a digital broadcast device. The content delivery device 12 broadcasts encrypted digital content which is superimposed on a digital broadcast wave, via the broadcast satellite 13. The encrypted digital content referred to here is ciphertext data $C_1$ received by the reception device 10.

The content delivery device 12 has an encryption/decryption unit which is identical to the encryption/decryption unit 106 in the reception device 10. This being so, the content delivery device 12 encrypts plaintext data P into ciphertext data $C_1$ using 1280-bit key data $K_1$, and transmits ciphertext data $C_1$ to the reception device 10 through the broadcast satellite 13.

4. Modifications

The present invention has been described by way of the above embodiment, though it should be obvious that the invention is not limited to the above. Example modifications are given below.

(1) The above embodiment describes the case where digital content is transmitted by satellite digital broadcasting, but the invention is not limited to such. The digital content may equally be transmitted through the Internet, a mobile phone network, a cable television network, a terrestrial digital broadcast network, or a recording medium such as a DVD.

(2) Examples of digital content described in the above embodiment include digitized movie films, music, still images, moving images, software games, computer programs, and other various data.

(3) The above embodiment describes the case where each data transformation unit has the construction shown in FIGS. 6, 7, and 8, but this is not a limit for the invention. Each data transformation unit may have another construction so long as it performs an involution.

(4) The above embodiment describes the case where the first data diffusion unit 230 and the second data diffusion unit 240 have the constructions shown in FIGS. 9 and 10 respectively, but this is not a limit for the invention. The first data diffusion unit 230 and the second data diffusion unit 240 may have other constructions so long as they have an inverse relationship.

(5) In the above embodiment, plaintext data P, ciphertext data $C_1$, and ciphertext data $C_2$ may have any data size.

The encryption/decryption unit 106 performs encryption and decryption in units of 128 bits. Accordingly, in each of the decryption of ciphertext data $C_1$ into plaintext data P, the encryption of plaintext data P into ciphertext data $C_2$, and the decryption of ciphertext data $C_2$ into plaintext data P, the control unit 105 controls the encryption/decryption unit 106 to repeat processing in units of 128 bits until the whole data is processed.

(6) The above embodiment describes the case where key data $K_1$ and key data $K_2$ are each 1280 bits long, but this may be modified in such a way as to generate 1280-bit data from key data smaller than 1280 bits using a random number generator.

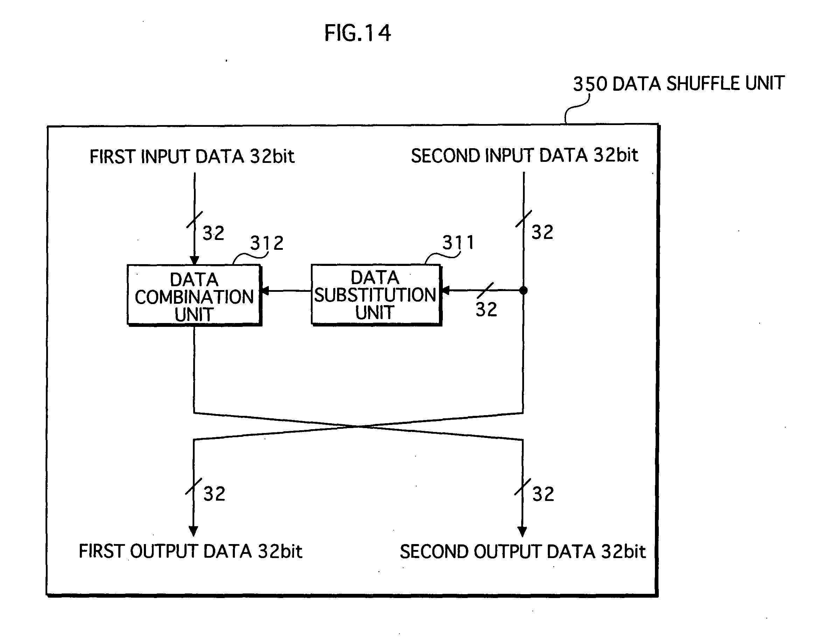

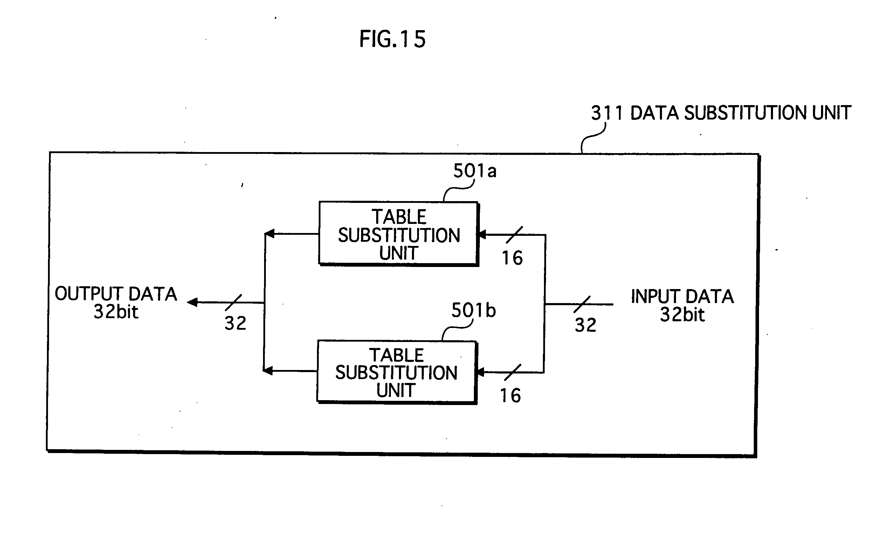

(7) The above embodiment describes the case where the data transformation units, the first data diffusion unit 230, and the second data diffusion unit 240 each perform processing in units of 32 bits, but the processing data size should not be limited to such. One specific example of this is explained below, with reference to FIGS. 14 and 15.

FIG. 14 shows a data shuffle unit 350. This data shuffle unit 350 includes a data substitution unit 311 and a data combination unit 312, like the data shuffle unit 300a. However, the data shuffle unit 350 differs from the data shuffle unit 300a in that data is processed in units of 64 bits.

64-bit data input in the data shuffle unit 350 is divided into the higher-order 32-bit data and the lower-order 32-bit data. The higher-order 32-bit data is input in the data combination unit 312, whilst the lower-order 32-bit data is input in the data substitution unit 311 and at the same time is output as the higher-order 32 bits of the output data of the data shuffle unit 350. The data substitution unit 311 includes table substitution units 501a and 501b, as shown in FIG. 15. The higher-order 16 bits of the 32-bit data are input in the table substitution unit 501a, whereas the lower-order 16 bits are input in the table substitution unit 501b. The table substitution units 501a and 501b each perform data substitution using a substitution table. Resulting 32-bit data output from the data substitution unit 311 is then input in the data combination unit 312. The data combination unit 312 performs a bitwise exclusive-OR operation on the higher-order 32-bit data and the 32-bit data output from the data substitution unit 311, and outputs the result as the lower-order 32 bits of the output data of the data shuffle unit 350.

According to this construction, the invention can be applied to a machine equipped with a 64-bit CPU.

(8) In the above embodiment, the operation of each data transformation unit in the first data scramble unit 202 may be repeated a plurality of times. Also, the operation of the first data diffusion unit 230 or second data diffusion unit 240 in the first data scramble unit 202 may be repeated a plurality of times.

(9) The invention also applies to the method described above. This method may be realized by a computer program that is executed by a computer. Such a computer program may be distributed as a digital signal.

The invention may also be realized by a computer-readable storage medium, such as a floppy disk, a hard disk, a CD-ROM (Compact Disc-Read Only Memory), an MO (Magneto-Optical) disc, a DVD (Digital Versatile Disc), a DVD-ROM, a DVD-RAM, or a semiconductor memory, on which the computer program or digital signal mentioned above is recorded. Conversely, the invention may also be realized by the computer program or digital signal that is recorded on such a storage medium.

The computer program or digital signal that achieves the invention may also be transmitted via a network, such as an electronic communications network, a wired or wireless communications network, or the Internet.

The invention can also be realized by a computer system that includes a microprocessor and a memory. In this case, the computer program can be stored in the memory, with the microprocessor operating in accordance with this computer program.

The computer program or digital signal may be provided to an independent computer system by distributing a storage medium on which the computer program or digital signal is recorded, or by transmitting the computer program or digital signal via a network. The independent computer system may then execute the computer program or digital signal to function as the invention.

(10) The limitations described in the embodiment and the modifications may be freely combined.

Although the present invention has been fully described by way of examples with reference to the accompanying drawings, it is to be noted that various changes and modifications will be apparent to those skilled in the art.

Therefore, unless such changes and modifications depart from the scope of the present invention, they should be construed as being included therein.

**Claims**

1.  A data encryption device for encrypting N-bit plaintext to generate N-bit ciphertext where N is a positive integer, comprising:

   a division unit operable to divide the N-bit plaintext into M data blocks which are each B bits long, where $N = M \times B$;
   a first transformation unit operable to perform a data transformation on each of the M data blocks, the data transformation being equal to its own inverse;
   a diffusion unit operable to perform an invertible data diffusion on the M data blocks transformed by the first transformation unit;
   a second transformation unit operable to perform the same data transformation as the data transformation performed by the first transformation unit, on each of the M data blocks diffused by the diffusion unit; and
   a connection unit operable to connect the M data blocks transformed by the second transformation unit, thereby generating the N-bit ciphertext.

2.  The data encryption device of Claim 1, wherein the first transformation unit includes:

   a division subunit operable to divide each of the M data blocks into first data of higher-order B/2 bits and second data of lower-order B/2 bits;
   a shuffle subunit operable to shuffle the first data and the second data to generate third data of higher-order B/2 bits and fourth data of lower-order B/2 bits; and
   a connection subunit operable to exchange in order the third data and the fourth data, and connect the exchanged third data and fourth data as a data block transformed by the first transformation unit.

3.  The data encryption device of Claim 2, wherein the shuffle subunit includes:

   a substitution subunit operable to concurrently (a) perform a substitution on the second data and output the substituted second data to a combination subunit, and (b) output the second data as the fourth data; and
   the combination subunit operable to combine the first data and the substituted second data, and output the combination as the third data.

4.  The data encryption device of Claim 1,
   wherein the first transformation unit is operable to perform the data transformation on each of the M data blocks a plurality of times, and
   the diffusion unit is operable to perform the data diffusion on the M data blocks transformed by the first transformation unit, a plurality of times.

5.  A data encryption device for encrypting N-bit plaintext to generate N-bit ciphertext where N is a positive integer, comprising:

   a division unit operable to divide the N-bit plaintext into M data blocks which are each B bits long, where $N = M \times B$;
   a first transformation unit operable to perform a series of operations a plurality of times on each of the M data blocks, the series of operations including, in the stated order, (a) a data transformation that is equal to its own inverse and (b) an invertible data diffusion;
   a round control unit operable to count a number of times the first transformation unit has performed the series of operations, and when the number reaches a predetermined number, to output the resulting M data blocks to a second transformation unit;
   the second transformation unit operable to perform the same data transformation as the data transformation performed by the first transformation unit, on each of the M data blocks output from the round control unit; and a connection unit operable to connect the M data blocks transformed by the second transformation unit, thereby generating the N-bit ciphertext.

**6.** A data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where $N=M\times B$, (2) performing a data transformation that is equal to its own inverse, on each of the M data blocks, (3) performing an invertible data diffusion on the transformed M data blocks, (4) further performing the data transformation on each of the diffused M data blocks, and (5) connecting the further transformed M data blocks as the N-bit ciphertext, the data decryption device comprising:

a division unit operable to divide the N-bit ciphertext into M data blocks which are each B bits long;
a first transformation unit operable to perform the same data transformation as the data transformation performed by the data encryption device, on each of the M data blocks divided by the division unit;
an inverse diffusion unit operable to perform an inverse of the data diffusion performed by the data encryption device, on the M data blocks transformed by the first transformation unit;
a second transformation unit operable to perform the same data transformation as the data transformation performed by the data encryption device, on each of the M data blocks inverse-diffused by the inverse diffusion unit; and
a connection unit operable to connect the M data blocks transformed by the second transformation unit, thereby obtaining the N-bit plaintext.

**7.** The data decryption device of Claim 6, wherein the first transformation unit includes:

a division subunit operable to divide each of the M data blocks into first data of higher-order B/2 bits and second data of lower-order B/2 bits;
a shuffle subunit operable to shuffle the first data and the second data, to generate third data of higher-order B/2 bits and fourth data of lower-order B/2 bits; and
a connection subunit operable to exchange in order the third data and the fourth data, and connect the exchanged third data and fourth data as a data block transformed by the first transformation unit.

**8.** The data decryption device of Claim 7, wherein the shuffle subunit includes:

a substitution subunit operable to concurrently (a) perform a substitution on the second data and output the substituted second data to a combination subunit, and (b) output the second data as the fourth data; and
the combination subunit operable to combine the first data and the substituted second data, and output the combination as the third data.

**9.** A data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where $N=M\times B$, (2) performing a first series of operations a plurality of times on each of the M data blocks, the first series of operations including, in the stated order, (a) a data transformation that is equal to its own inverse and (b) an invertible data diffusion, (3) counting a number of times the first series of operations has been performed, and when the number reaches a predetermined number, outputting the resulting M data blocks, (4) further performing the data transformation on each of the output M data blocks, and (5) connecting the further transformed M data blocks as the N-bit ciphertext, the data decryption device comprising:

a division unit operable to divide the N-bit ciphertext into M data blocks which are each B bits long;
a first transformation unit operable to perform a second series of operations a plurality of times on each of the M data blocks divided by the division unit, the second series of operations including, in the stated order, (c) the same data transformation as the data transformation performed by the data encryption device and (d) an inverse of the data diffusion performed by the data encryption device;
a round control unit operable to count a number of times the first transformation unit has performed the second series of operations, and when the number reaches the predetermined number, to output the resulting M data blocks to a second transformation unit;
the second transformation unit operable to perform the same data transformation as the data transformation performed by the data encryption device, on each of the M data blocks output from the round control unit; and
a connection unit operable to connect the M data blocks transformed by the second transformation unit, thereby obtaining the N-bit plaintext.

**10.** A data encryption/decryption device for encrypting/decrypting first N-bit data to generate second N-bit data where N is a positive integer, comprising:

a division unit operable to divide the first N-bit data into M data blocks which are each B bits long, where $N=M{\times}B$;

a first transformation unit operable to perform a data transformation on each of the M data blocks, the data transformation being equal to its own inverse;

a switch unit operable to switch an output destination of the M data blocks transformed by the first transformation unit, depending on whether the first N-bit data is subjected to encryption or decryption;

a diffusion unit operable to receive the M data blocks transformed by the first transformation unit when the first N-bit data is subjected to encryption, and perform an invertible data diffusion on the received M data blocks;

an inverse diffusion unit operable to receive the M data blocks transformed by the first transformation unit when the first N-bit data is subjected to decryption, and perform an inverse of the data diffusion on the received M data blocks;

a second transformation unit operable to perform the same data transformation as the data transformation performed by the first transformation unit, on each of the M data blocks diffused by the diffusion unit or inverse-diffused by the inverse diffusion unit; and

a connection unit operable to connect the M data blocks transformed by the second transformation unit, thereby generating the second N-bit data.

**11.** A data communication system comprising a data encryption device and a data decryption device,
the data encryption device including:

a first division unit operable to divide N-bit plaintext into M data blocks which are each B bits long, where N is a positive integer and $N=M{\times}B$;

a first transformation unit operable to perform a data transformation on each of the M data blocks, the data transformation being equal to its own inverse;

a diffusion unit operable to perform an invertible data diffusion on the M data blocks transformed by the first transformation unit;

a second transformation unit operable to perform the same data transformation as the data transformation performed by the first transformation unit, on each of the M data blocks diffused by the diffusion unit; and

a first connection unit operable to connect the M data blocks transformed by the second transformation unit, thereby generating N-bit ciphertext, and
the data decryption device including:

a second division unit operable to divide the N-bit ciphertext into M data blocks which are each B bits long;

a third transformation unit operable to perform the same data transformation as the data transformation performed by the first transformation unit, on each of the M data blocks divided by the second division unit;

an inverse diffusion unit operable to perform an inverse of the data diffusion performed by the diffusion unit, on the M data blocks transformed by the third transformation unit;

a fourth transformation unit operable to perform the same data transformation as the data transformation performed by the first transformation unit, on each of the M data blocks inverse-diffused by the inverse diffusion unit; and

a second connection unit operable to connect the M data blocks transformed by the fourth transformation unit, thereby obtaining the N-bit plaintext.

**12.** A data communication system comprising a data encryption device and a data decryption device,
the data encryption device including:

a first division unit operable to divide N-bit plaintext into M data blocks which are each B bits long, where N is a positive integer and $N=M{\times}B$;

a first transformation unit operable to perform a first series of operations a plurality of times on each of the M data blocks, the first series of operations including, in the stated order, (a) a data transformation that is equal to its own inverse and (b) an invertible data diffusion;

a first round control unit operable to count a number of times the first transformation unit has performed the first series of operations, and when the number reaches a predetermined number, to output the resulting M data blocks to a second transformation unit;

the second transformation unit operable to perform the same data transformation as the data transformation performed by the first transformation unit, on each of the M data blocks output from the first round control unit; and

a first connection unit operable to connect the M data blocks transformed by the second transformation unit, thereby generating N-bit ciphertext, and

the data decryption device including:

a second division unit operable to divide the N-bit ciphertext into M data blocks which are each B bits long;

a third transformation unit operable to perform a second series of operations a plurality of times on each of the M data blocks divided by the second division unit, the second series of operations including, in the stated order, (c) the same data transformation as the data transformation performed by the first transformation unit and (d) an inverse of the data diffusion performed by the first transformation unit;

a second round control unit operable to count a number of times the third transformation unit has performed the second series of operations, and when the number reaches the predetermined number, to output the resulting M data blocks to a fourth transformation unit;

the fourth transformation unit operable to perform the same data transformation as the data transformation performed by the first transformation unit, on each of the M data blocks output from the second round control unit; and

a second connection unit operable to connect the M data blocks transformed by the fourth transformation unit, thereby obtaining the N-bit plaintext.

**13.** A data encryption/decryption device for encrypting/decrypting first N-bit data to generate second N-bit data where N is a positive integer, comprising:

a division unit operable to divide the first N-bit data into M data blocks which are each B bits long, where $N=M \times B$;

a switch unit operable to switch an output destination of the M data blocks, depending on whether the first N-bit data is subjected to encryption or decryption;

a first transformation unit operable to receive the M data blocks when the first N-bit data is subjected to encryption, and perform a first series of operations a plurality of times on each of the M data blocks, the first series of operations including, in the stated order, (a) a data transformation that is equal to its own inverse and (b) an invertible data diffusion;

a second transformation unit operable to receive the M data blocks when the first N-bit data is subjected to decryption, and perform a second series of operations a plurality of times on each of the M data blocks, the second series of operations including, in the stated order, (c) the same data transformation as the data transformation performed by the first transformation unit and (d) an inverse of the data diffusion performed by the first transformation unit;

a round control unit operable to count a number of times the first transformation unit has performed the first series of operations or the second transformation unit has performed the second series of operations, and when the number reaches a predetermined number, to output the resulting M data blocks to a third transformation unit;

the third transformation unit operable to perform the same data transformation as the data transformation performed by the first transformation unit, on each of the M data blocks output from the round control unit; and

a connection unit operable to connect the M data blocks transformed by the third transformation unit, thereby generating the second N-bit data.

**14.** A data encryption method used in a data encryption device for encrypting N-bit plaintext to generate N-bit ciphertext where N is a positive integer, comprising:

dividing the N-bit plaintext into M data blocks which are each B bits long, where $N=M \times B$;

performing a data transformation on each of the M data blocks, the data transformation being equal to its own inverse;

performing an invertible data diffusion on the transformed M data blocks;

further performing the data transformation on each of the diffused M data blocks; and

connecting the further transformed M data blocks, thereby generating the N-bit ciphertext.

**15.** A computer readable program used in a data encryption device for encrypting N-bit plaintext to generate N-bit ciphertext where N is a positive integer, the computer readable program comprising computer readable instructions capable of instructing a computer to:

divide the N-bit plaintext into M data blocks which are each B bits long, where N=M×B;
perform a data transformation on each of the M data blocks, the data transformation being equal to its own inverse;
perform an invertible data diffusion on the transformed M data blocks;
further perform the data transformation on each of the diffused M data blocks; and
connect the further transformed M data blocks, thereby generating the N-bit ciphertext.

16. A computer-readable storage medium storing a computer readable program used in a data encryption device for encrypting N-bit plaintext to generate N-bit ciphertext where N is a positive integer, the computer readable program comprising computer readable instructions capable of instructing a computer to:

divide the N-bit plaintext into M data blocks which are each B bits long, where N=M×B;
perform a data transformation on each of the M data blocks, the data transformation being equal to its own inverse;
perform an invertible data diffusion on the transformed M data blocks;
further perform the data transformation on each of the diffused M data blocks; and
connect the further transformed M data blocks, thereby generating the N-bit ciphertext.

17. A data decryption method used in a data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where N=M×B, (2) performing a data transformation that is equal to its own inverse, on each of the M data blocks, (3) performing an invertible data diffusion on the transformed M data blocks, (4) further performing the data transformation on each of the diffused M data blocks, and (5) connecting the further transformed M data blocks as the N-bit ciphertext, the data decryption method comprising:

dividing the N-bit ciphertext into M data blocks which are each B bits long;
performing the same data transformation as the data transformation performed by the data encryption device, on each of the divided M data blocks;
performing an inverse of the data diffusion performed by the data encryption device, on the transformed M data blocks;
further performing the same data transformation as the data transformation performed by the data encryption device, on each of the inverse-diffused M data blocks; and
connecting the further transformed M data blocks, thereby obtaining the N-bit plaintext.

18. A computer readable program used in a data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where N=M×B, (2) performing a data transformation that is equal to its own inverse, on each of the M data blocks, (3) performing an invertible data diffusion on the transformed M data blocks, (4) further performing the data transformation on each of the diffused M data blocks, and (5) connecting the further transformed M data blocks as the N-bit ciphertext, the computer readable program comprising computer readable instructions capable of instructing a computer to:

divide the N-bit ciphertext into M data blocks which are each B bits long;
perform the same data transformation as the data transformation performed by the data encryption device, on each of the divided M data blocks;
perform an inverse of the data diffusion performed by the data encryption device, on the transformed M data blocks;
further perform the same data transformation as the data transformation performed by the data encryption device, on each of the inverse-diffused M data blocks; and
connect the further transformed M data blocks, thereby obtaining the N-bit plaintext.

19. A computer-readable storage medium storing a computer readable program used in a data decryption device for decrypting N-bit ciphertext to obtain N-bit plaintext where N is a positive integer, the N-bit ciphertext being generated by a data encryption device by (1) dividing the N-bit plaintext into M data blocks which are each B bits long where N=M×B, (2) performing a data transformation that is equal to its own inverse, on each of the M data blocks, (3) performing an invertible data diffusion on the transformed M data blocks, (4) further performing the data transformation on each of the diffused M data blocks, and (5) connecting the further transformed M data blocks as the N-bit ciphertext, the computer readable program comprising computer readable instructions capable of instructing a computer to:

divide the N-bit ciphertext into M data blocks which are each B bits long;
perform the same data transformation as the data transformation performed by the data encryption device, on each of the divided M data blocks;
perform an inverse of the data diffusion performed by the data encryption device, on the transformed M data blocks;
further perform the same data transformation as the data transformation performed by the data encryption device, on each of the inverse-diffused M data blocks; and
connect the further transformed M data blocks, thereby obtaining the N-bit plaintext.

20. A data encryption/decryption method used in a data encryption/decryption device for encrypting/decrypting first N-bit data to generate second N-bit data where N is a positive integer, comprising:

dividing the first N-bit data into M data blocks which are each B bits long, where N=M×B;
performing a data transformation on each of the M data blocks, the data transformation being equal to its own inverse;
switching an output destination of the transformed M data blocks, depending on whether the first N-bit data is subjected to encryption or decryption;
receiving the transformed M data blocks when the first N-bit data is subjected to encryption, and performing an invertible data diffusion on the received M data blocks;
receiving the transformed M data blocks when the first N-bit data is subjected to decryption, and performing an inverse of the data diffusion on the received M data blocks;
further performing the data transformation on each of the diffused M data blocks or the inverse-diffused M data blocks; and
connecting the further transformed M data blocks, thereby generating the second N-bit data.

21. A computer readable program used in a data encryption/decryption device for encrypting/decrypting first N-bit data to generate second N-bit data where N is a positive integer, the computer readable program comprising computer readable instructions capable of instructing a computer to:

divide the first N-bit data into M data blocks which are each B bits long, where N=M×B;
perform a data transformation on each of the M data blocks, the data transformation being equal to its own inverse;
switch an output destination of the transformed M data blocks, depending on whether the first N-bit data is subjected to encryption or decryption;
receive the transformed M data blocks when the first N-bit data is subjected to encryption, and perform an invertible data diffusion on the received M data blocks;
receive the transformed M data blocks when the first N-bit data is subjected to decryption, and perform an inverse of the data diffusion on the received M data blocks;
further perform the data transformation on each of the diffused M data blocks or the inverse-diffused M data blocks; and
connect the further transformed M data blocks, thereby generating the second N-bit data.

22. A computer-readable storage medium storing a computer readable program used in a data encryption/decryption device for encrypting/decrypting first N-bit data to generate second N-bit data where N is a positive integer, the computer readable program comprising computer readable instructions capable of instructing a computer to:

divide the first N-bit data into M data blocks which are each B bits long, where N=M×B;
perform a data transformation on each of the M data blocks, the data transformation being equal to its own inverse;
switch an output destination of the transformed M data blocks, depending on whether the first N-bit data is subjected to encryption or decryption;
receive the transformed M data blocks when the first N-bit data is subjected to encryption, and perform an invertible data diffusion on the received M data blocks;

receive the transformed M data blocks when the first N-bit data is subjected to decryption, and perform an inverse of the data diffusion on the received M data blocks;

further perform the data transformation on each of the diffused M data blocks or the inverse-diffused M data blocks; and

connect the further transformed M data blocks, thereby generating the second N-bit data.

FIG.1

11 RECORDING MEDIUM

10

13

RECEPTION DEVICE

1.CRYPTOGRAPHIC COMMUNICATION SYSTEM

12 CONTENT DELIVERY DEVICE

FIG.2

# FIG.3

CONTROL UNIT 105

106 ENCRYPTION/DECRYPTION UNIT

202 FIRST DATA SCRAMBLE UNIT

201 KEY CONTROL UNIT

CONTROL UNIT 105

203 ROUND CONTROL UNIT

204 SECOND DATA SCRAMBLE UNIT

INPUT/OUTPUT UNIT 107

EP 1 347 595 A1

## FIG.4

ROUND CONTROL UNIT 203          204 SECOND DATA SCRAMBLE UNIT

128 /

| 32 / 210e | 32 / 210f | 32 / 210g | 32 / 210h |

| DATA TRANSFORMATION UNIT | DATA TRANSFORMATION UNIT | DATA TRANSFORMATION UNIT | DATA TRANSFORMATION UNIT |

32 /          32 /          32 /          32 /

128 /

CONTROL UNIT 105          INPUT/OUTPUT UNIT 107

EP 1 347 595 A1

## FIG.5

EP 1 347 595 A1

CONTROL UNIT 105

202 FIRST DATA SCRAMBLE UNIT

128

32  210a  32  210b  32  210c  32  210d

| DATA TRANSFORMATION UNIT | DATA TRANSFORMATION UNIT | DATA TRANSFORMATION UNIT | DATA TRANSFORMATION UNIT |

32   32   32   32

SWITCH UNIT  220  CONTROL UNIT 105

32  32  32  32  230

FIRST DATA DIFFUSION UNIT

32  32  32  32

32  32  32  32  240

SECOND DATA DIFFUSION UNIT

32  32  32  32

KEY CONTROL UNIT 201

128

ROUND CONTROL UNIT 203

FIG.6

210a DATA TRANSFORMATION UNIT

CONTROL UNIT 105

DATA SHUFFLE UNIT 300a

DATA SHUFFLE UNIT 300b

DATA SHUFFLE UNIT 300c

SWITCH UNIT 220

32 16 16 16 16 16 16 16 32

FIG.7

300a DATA SHUFFLE UNIT

FIRST INPUT DATA 16bit

SECOND INPUT DATA 16bit

F0

F1

/16

/16

302

301

DATA
COMBINATION
UNIT

G

DATA
SUBSTITUTION
UNIT

16

H0

H1

/16

/16

FIRST OUTPUT DATA 16bit

SECOND OUTPUT DATA 16bit

EP 1 347 595 A1

EP 1 347 595 A1

# FIG.8

301 DATA SUBSTITUTION UNIT

401a

TABLE SUBSTITUTION UNIT

401b

TABLE SUBSTITUTION UNIT

INPUT DATA 16bit

F1 / 16

8

8

OUTPUT DATA 16bit

G / 16

FIG.9

FIG.10

240 SECOND DATA DIFFUSION UNIT

# FIG.11

```
                    ( START )

                         │                    S101
                         ▼
            ┌─────────────────────────────┐
            │   RECEIVE CIPHERTEXT DATA C1 │
            └─────────────────────────────┘
                         │                    S102
                         ▼
            ┌─────────────────────────────┐
            │    STORE CIPHERTEXT DATA C1  │
            └─────────────────────────────┘
                         │                    S103
                         ▼
         ┌──────────────────────────────────┐
         │   RECEIVE AND STORE KEY DATA K1   │
         └──────────────────────────────────┘
                         │                    S104
                         ▼
   ┌────────────────────────────────────────────────────┐
   │ DECRYPT CIPHERTEXT DATA C1 INTO PLAINTEXT DATA P    │
   └────────────────────────────────────────────────────┘
                         │                    S105
                         ▼
         ┌──────────────────────────────────┐
         │   RECEIVE AND STORE KEY DATA K2   │
         └──────────────────────────────────┘
                         │                    S106
                         ▼
   ┌────────────────────────────────────────────────────┐
   │ ENCRYPT PLAINTEXT DATA P INTO CIPHERTEXT DATA C2    │
   └────────────────────────────────────────────────────┘
                         │                    S107
                         ▼
   ┌────────────────────────────────────────────────────┐
   │ WRITE CIPHERTEXT DATA C2 ONTO RECORDING MEDIUM      │
   └────────────────────────────────────────────────────┘
                         │
                         ▼
                    (  END  )
```

# FIG.12

```
        ( DECRYPTION START )
                 │
                 ▼                      S201
   ┌─────────────────────────────┐
   │ OUTPUT CIPHERTEXT DATA C₁    │
   │ TO FIRST DATA SCRAMBLE UNIT  │
   └─────────────────────────────┘
                 │
                 ▼                      S202
   ┌─────────────────────────────┐
   │ OUTPUT KEY DATA K₁ TO KEY CONTROL │
   │ UNIT TO DIVIDE KEY DATA      │
   │ INTO PARTIAL KEYS            │
   └─────────────────────────────┘
                 │
                 ▼
                 │                      S203
        ┌───────────────────────┐
        │ FIRST DATA SCRAMBLE UNIT │
        └───────────────────────┘
                 │
                 ▼        S204
             ◇─────────────◇     NO
            ◇ TENTH PROCESSING? ◇──────┐
             ◇─────────────◇           │
                 │ YES                 │
                 ▼           S205       (to S203)
        ┌───────────────────────┐
        │ SECOND DATA SCRAMBLE UNIT │
        └───────────────────────┘
                 │
                 ▼
            ( RETURN )
```

# FIG.13

```
         ( ENCRYPTION START )
                   |
                   |            S301
                   v
   ┌─────────────────────────────────┐
   │ OUTPUT PLAINTEXT DATA P TO FIRST │
   │ DATA SCRAMBLE UNIT               │
   └─────────────────────────────────┘
                   |
                   |            S302
                   v
   ┌─────────────────────────────────┐
   │ OUTPUT KEY DATA K₂ TO KEY CONTROL│
   │ UNIT TO DIVIDE KEY DATA          │
   │ INTO PARTIAL KEYS                │
   └─────────────────────────────────┘
                   |
                   v  <──────────────────┐
                   |       S303          │
                   v                     │
   ┌─────────────────────────────────┐   │
   │ FIRST DATA SCRAMBLE UNIT        │   │
   └─────────────────────────────────┘   │
                   |                     │
                   |       S304          │
                   v          NO         │
            < TENTH PROCESSING? >─────────┘
                   |
                   | YES
                   |       S305
                   v
   ┌─────────────────────────────────┐
   │ SECOND DATA SCRAMBLE UNIT       │
   └─────────────────────────────────┘
                   |
                   v
            (   RETURN   )
```

FIG.14

350 DATA SHUFFLE UNIT

SECOND INPUT DATA 32bit

FIRST INPUT DATA 32bit

311 DATA SUBSTITUTION UNIT

312 DATA COMBINATION UNIT

32

32

32

32

32

SECOND OUTPUT DATA 32bit

FIRST OUTPUT DATA 32bit

# FIG.15

311 DATA SUBSTITUTION UNIT

501a

TABLE
SUBSTITUTION
UNIT

16

501b

TABLE
SUBSTITUTION
UNIT

16

OUTPUT DATA
32bit

32

INPUT DATA
32bit

32

**European Patent Office**

## EUROPEAN SEARCH REPORT

Application Number

EP 03 00 5370

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | MILLAN W ET AL: "A single-chip FPGA implementation of a self-synchronous cipher" TENCON '97. IEEE REGION 10 ANNUAL CONFERENCE. SPEECH AND IMAGE TECHNOLOGIES FOR COMPUTING AND TELECOMMUNICATIONS., PROCEEDINGS OF IEEE BRISBANE, QLD., AUSTRALIA 2-4 DEC. 1997, NEW YORK, NY, USA,IEEE, US, 2 December 1997 (1997-12-02), pages 223-226, XP010264200 ISBN: 0-7803-4365-4 * page 224, right-hand column - page 225, left-hand column; figures 1,4,5 * | 1-22 | H04L9/06 |
| A | AOKI K ET AL: "128 Bit block angou camellia/CAMELLIA - A 128- BIT BLOCK CIPHER" DENSHI JOHO TSUSHIN GAKKAI GIJUTSU KUNKYU HOKOKU - IEICE TECHNICAL REPORT, DENSHI JOHO TSUSHIN GAKKAI, TOKYO, JP, vol. 100, no. 76, 18 May 2000 (2000-05-18), pages 47-75, XP002942210 ISSN: 0913-5685 * abstract * | 1-22 | |
| A | KANDA M ET AL: "A NEW 128-BIT BLOCK CIPHER E2" DENSHI JOHO TSUSHIN GAKKAI GIJUTSU KUNKYU HOKOKU - IEICE TECHNICAL REPORT, DENSHI JOHO TSUSHIN GAKKAI, TOKYO, JP, vol. 98, no. 227, 30 September 1998 (1998-09-30), pages 13-24, XP002920163 ISSN: 0913-5685 * abstract * | 1-22 | TECHNICAL FIELDS SEARCHED (Int.Cl.7) H04L |

-/--

The present search report has been drawn up for all claims

| Place of search | Date of completion of the search | Examiner |
|---|---|---|
| BERLIN | 4 April 2003 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 347 595 A1**

European Patent Office

**EUROPEAN SEARCH REPORT**

Application Number

EP 03 00 5370

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | TAKESHI SHIMOYAMA ET AL: "Kyoutsu kagi block angou SC2000 (Symmetric Key Block Cipher SC2000)" DENSHI JOHO TSUSHIN GAKKAI GIJUTSU KUNKYU HOKOKU - IEICE TECHNICAL REPORT, DENSHI JOHO TSUSHIN GAKKAI, TOKYO, JP, vol. 100, no. 324, 22 September 2000 (2000-09-22), pages 101-130, XP002952492 ISSN: 0913-5685 * abstract * --- | 1-22 | |
| A | MATSUI M: "NEW STRUCTURE OF BLOCK CIPHERS WITH PROVABLE SECURITY AGAINST DIFFERENTIAL AND LINEAR CRYPTANALYSIS" LECTURE NOTES IN COMPUTER SCIENCE, SPRINGER VERLAG, NEW YORK, NY, US, vol. 1039, 1996, pages 205-218, XP002914985 ISSN: 0302-9743 * abstract * * page 216 - page 218 * ----- | 1-22 | |

TECHNICAL FIELDS SEARCHED (Int.Cl.7)

The present search report has been drawn up for all claims

| Place of search | Date of completion of the search | Examiner |
|---|---|---|
| BERLIN | 4 April 2003 | Carnerero Álvaro, F |

EPO FORM 1503 03.82 (P04C01)